# FASCICULE DE BREVET EUROPEEN

(11) **EP 1 885 036 B1**
(45) Date de publication et mention de la délivrance du brevet: **30.10.2013**
(21) Numéro de dépôt: 07290912.0
(22) Date de dépôt: 20.07.2007
(51) Int. Cl.: H02B 1/20

(54) **Ensemble de distribution pour installation électrique**
Verteilereinheit für elektrische Anlage
Distribution unit for electrical installation

(30) Priorité: 03.08.2006 FR 0653280
(43) Date de publication de la demande: 06.02.2008
(73) Titulaire: Legrand France, 87000 Limoges (FR); Legrand SNC, 87000 Limoges (FR)
(72) Inventeur: Antico, Christophe, 06600 Antibes (FR); Pujol, Bruno, 06580 Pegomas (FR); Bouteloup, Geoffroy, 06140 Vence (FR); Bizzarri, Tito, 06410 Biot (FR); Deleuse, Frédéric, 06800 Cagnes sur mer (FR)
(74) Mandataire: Santarelli

(56) Documents cités:
- EP-A1- 0 552 113
- DE-A1- 4 446 601
- US-A- 3 346 777
- US-A1- 2003 136 657

## Description

### DOMAINE DE L'INVENTION

L'invention a trait aux ensembles de distribution pour installation électrique qui comportent une pluralité d'appareils de protection.

### ARRIERE PLAN TECHNOLOGIQUE

On sait que l'on raccorde à de tels ensembles des câbles d'arrivée connectés à la source d'énergie électrique et des câbles de départ connectés à des circuits divisionnaires tels que des circuits d'éclairage ou des circuits de prises de courant.

Les appareils de protection appartenant à un tel ensemble permettent d'ouvrir au moins une liaison entre les conducteurs d'arrivée et les conducteurs de départ d'un circuit divisionnaire lorsqu'il s'y produit un défaut électrique, notamment un court-circuit ou une surcharge.

En outre de ces appareils de protection, un tel ensemble comporte parfois des appareils de commande comme par exemple un télérupteur ou un interrupteur horaire, voire un auxiliaire de signalisation associé à un autre appareil.

On connaît déjà, notamment par la demande de brevet français 2 685 563, un tel ensemble qui comporte :
- une pluralité d'appareils électriques au format modulaire, c'est-à-dire à forme globalement parallélépipédique avec deux faces principales et des faces latérales s'étendant de l'une à l'autre des faces principales, en l'occurrence une face arrière, une face inférieure, une face avant et une face supérieure, la largeur d'un tel appareil, c'est-à-dire l'écart entre ses deux faces principales, étant égale à un nombre entier d'une largeur de base, connue sous le nom de « module », qui est de l'ordre de 18 mm ;
- deux barres omnibus pour chacune répartir horizontalement entre ces appareils un pôle respectif des deux pôles d'une source d'énergie électrique monophasée, chaque barre omnibus étant en forme de peigne présentant des dents régulièrement réparties suivant un pas égal à 1 module ; et
- un rail de support prévu pour être disposé horizontalement, lesdits appareils étant adaptés à former, lorsqu'ils sont fixés sur ledit rail de support, une rangée où ils sont disposés côte-à-côte, la partie supérieure de chaque appareil, et d'ailleurs la partie inférieure de chaque appareil, étant adaptée à recevoir une dent respective de chaque peigne, par introduction au travers d'un orifice d'accès ménagé dans la face supérieure ou inférieure, chaque peigne pouvant être mis en place ou enlevé alors que les appareils sont fixés au rail de support.

### OBJET DE L'INVENTION

L'invention vise à améliorer les conditions de mise en oeuvre de tels ensembles.

Elle propose à cet effet un ensemble de distribution pour installation électrique, comportant :
- au moins deux barres omnibus pour chacune répartir horizontalement un pôle respectif d'une source d'énergie électrique ;
- une pluralité d'appareils électriques chacun de forme générale parallélépipédique avec deux faces principales et des faces latérales s'étendant de l'une à l'autre des faces principales, la partie supérieure de chaque dit appareil ou la partie inférieure de chaque dit appareil étant adaptée à recevoir une portion à introduire respective de chaque dite barre omnibus ; et
- un rail de support prévu pour être disposé horizontalement, lesdits appareils étant adaptés à former, lorsqu'ils sont fixés sur ledit rail de support, une rangée où ils sont disposés côte-à-côte, ledit rail de support et lesdites barres omnibus étant libres l'un par rapport aux autres, grâce à quoi lesdites barres omnibus peuvent être mises en place ou enlevées alors que lesdits appareils sont fixés au rail de support ;
caractérisé en ce que chaque dite barre omnibus est continue au niveau desdites portions à introduire, en ce que chaque dit appareil est adapté à recevoir respectivement une première dite barre omnibus dans un espace s'étendant depuis une première ouverture d'extrémité ménagée en bordure dans une face principale jusqu'à une première ouverture d'extrémité ménagée en bordure dans l'autre face principale, et une deuxième dite barre omnibus dans un espace s'étendant depuis une deuxième ouverture d'extrémité ménagée en bordure dans une face principale jusqu'à une deuxième ouverture d'extrémité ménagée en bordure dans l'autre face principale et en ce que lesdits appareils sont adaptés, lorsqu'ils forment une dite rangée, à ce que lesdites premières ouvertures soient alignées les unes avec les autres selon une première ligne et lesdites deuxièmes ouvertures soient alignées les unes avec les autres selon une deuxième ligne parallèle à ladite première ligne, avec pour plusieurs dits appareils électriques, la première barre omnibus qui est reçue dans une borne de neutre quand la première barre omnibus est dans l'espace s'étendant entre les deux première ouvertures d'extrémité ; et la deuxième barre omnibus qui est reçue dans une borne de phase quand la deuxième barre omnibus est dans l'espace s'étendant entre les deux deuxième ouvertures d'extrémité.

Le caractère continu de chaque barre omnibus et le fait que le support de montage des appareils soit un rail, et donc un support continu, offre une flexibilité totale de positionnement longitudinal des appareils de l'ensemble.

En particulier, si l'un de ces appareils présente une largeur différente d'un nombre entier de module, par exemple une largeur de 0,5 module, le caractère continu du rail de support permet à cet appareil d'être lui aussi disposé côte-à-côte avec les appareils voisins tandis que le caractère continu de chaque barre omnibus ne nécessite aucune mesure particulière pour en permettre l'introduction dans les appareils.

On notera à ce sujet que dans les ensembles de distribution où l'on utilise une barre omnibus conventionnelle en forme de peigne présentant des dents régulièrement réparties suivant un pas égal à 1 module et des appareils dont la face supérieure est munie d'un orifice pour recevoir une dent respective du peigne, le décalage créé par un appareil ayant une largeur de 0,5 module aurait pour effet que les orifices des appareils situés au-delà de cet appareil plus étroit ne se retrouveraient pas en face des dents du peigne, sauf à insérer, pour opérer une compensation, un deuxième appareil d'une largeur de 0,5 module.

Au surplus, le caractère continu de chaque barre omnibus et du rail permet de choisir librement la largeur des appareils individuels, en particulier sans limitation liée à la position des bornes de raccordement et à leur nombre.

Il est par exemple possible de prévoir des appareils à quatre bornes de raccordement en partie supérieure dont certains ont une largeur de 3 modules et dont d'autres ont une largeur de 4 modules.

On notera que l'on connaissait déjà, notamment par la demande de brevet américain 3,346,777, un ensemble de distribution comportant un empilement de trois barres omnibus continues fixées sur un panneau présentant une série d'orifices régulièrement répartis suivant un pas prédéterminé, ces orifices étant prévus pour accueillir des pattes de fixation des appareils, lesquelles pattes saillent des appareils vers l'arrière à l'opposé de l'empilement de barres omnibus.

Un tel ensemble de distribution n'offre pas la même flexibilité que l'ensemble selon l'invention puisque le positionnement des appareils est imposé par le pas de la série d'orifices de fixation ménagés dans le panneau de support. En outre, les conditions de montage et de démontage sont moins favorables dans cet ensemble de distribution antérieur, puisque l'empilement de barres omnibus continues est fixé sur le panneau.

L'ensemble de distribution pour installation électrique selon l'invention offre ainsi des conditions de mise en oeuvre plus favorables aussi bien vis-à-vis des ensembles antérieurs à rail de support et à barres omnibus en forme de peigne que vis-à-vis des ensembles antérieurs à panneau de support et à barres omnibus continues fixées sur le panneau de support.

On notera encore que l'on connaissait déjà, par la demande de brevet européen 0 552 113, un ensemble de distribution comportant un combiné disjoncteur et sectionneur de neutre formé par l'assemblage côte à côte d'un bloc de base renfermant un disjoncteur et d'un bloc auxiliaire de logement d'un sectionneur de neutre, les deux blocs étant formés par des boîtiers isolants de profils conjugués autorisant l'accolement des grandes faces latérales du disjoncteur et du sectionneur de neutre. En outre du combiné disjoncteur et sectionneur de neutre, l'ensemble de distribution comporte une barre omnibus continue pour répartir le pôle de phase et une barre omnibus continue pour répartir le pôle de neutre. Pour garantir que la barre omnibus de neutre reste à distance de la borne de phase du disjoncteur, il est prévu un capot de protection comportant une protubérance masquant l'échancrure d'accès à la borne de phase. Ainsi, seul le sectionneur de neutre reçoit la barre omnibus de neutre et seul le disjoncteur de phase reçoit la barre omnibus de phase. Dans le cas d'une installation triphasée, le sectionneur de neutre est associé à trois disjoncteurs de phase et la barre omnibus continue de neutre est remplacée par un peigne conventionnel.

Selon des caractéristiques préférées pour des raisons de simplicité et de commodité de mise en oeuvre lorsque doit être réparti chacun des pôles d'une source d'énergie électrique triphasée, chaque dit appareil est adapté à recevoir une troisième barre omnibus dans un espace s'étendant depuis une troisième ouverture d'extrémité ménagée en bordure dans une face principale jusqu'à une troisième ouverture d'extrémité ménagée en bordure dans l'autre face principale, et à recevoir une quatrième barre omnibus dans un espace s'étendant depuis une quatrième ouverture d'extrémité ménagée en bordure dans une face principale jusqu'à une

quatrième ouverture d'extrémité ménagée en bordure dans l'autre face principale, lesdits appareils étant adaptés, lorsqu'ils forment une dite rangée, à ce que lesdites troisièmes ouvertures soient alignées les unes avec les autres selon une troisième ligne parallèle à ladite première ligne et lesdites quatrièmes ouvertures soient alignées les unes avec les autres selon une quatrième ligne parallèle à ladite première ligne.

Selon d'autres caractéristiques préférées, pour des raisons de commodité, de simplicité et d'économie de mise en oeuvre de la ou des barre(s) omnibus :
- ladite barre omnibus est en forme de bande plate continue ;
- ladite barre omnibus comporte une extrémité longitudinale effilée ;
- ladite barre omnibus appartient à une réglette comportant en outre une embase en matière isolante présentant une gouttière dans laquelle est engagée et fixée ladite barre omnibus ;
- ladite réglette comporte au moins deux barres omnibus, ladite embase comportant entre chaque couple de deux gouttières voisines, une platine les réunissant ;
- ladite platine est de largeur constante, de sorte que ladite embase maintient lesdites barres omnibus dans une position où elles sont en regard deux à deux et parallèles les unes aux autres ;
- ladite réglette ne comporte, en outre desdites barres omnibus et desdites gouttières, aucun élément autre que ladite ou lesdites platine(s) ; et/ou
- lorsque ladite réglette est en place dans ladite rangée d'appareils, ladite embase vient contre ou à proximité immédiate de la face supérieure des appareils de cette rangée.

Selon d'autres caractéristiques préférées, pour des raisons de simplicité et de commodité de mise en oeuvre de la partie supérieure ou de la partie inférieure de chaque appareil adapté à recevoir une portion à introduire respective de la barre omnibus :
- la face supérieure ou la face inférieure d'au moins un dit appareil présente au moins une ouverture horizontale étroite et orientée suivant la direction gauche-droite, donnant accès audit espace adapté à recevoir ladite barre omnibus ;
- ladite ouverture horizontale s'étend de l'une à l'autre desdites faces principales ;
- ladite ouverture horizontale présente une largeur semblable à l'épaisseur de ladite barre omnibus ; et/ou
- une borne à insertion est disposée dans ledit espace adapté à recevoir ladite barre omnibus, ladite borne à insertion comportant une pince présentant deux tronçons latéraux prévus pour enserrer ladite barre omnibus, disposés respectivement de part et d'autre de ladite ouverture horizontale.

Selon d'autres caractéristiques préférées, pour les mêmes raisons :
- lesdites ouvertures d'extrémité sont étroites et orientées verticalement ;
- lesdites ouvertures d'extrémité présentent une largeur semblable à l'épaisseur de ladite barre omnibus ; et/ou
- une borne à insertion est disposée dans ledit espace adapté à recevoir ladite barre omnibus, ladite borne à insertion comportant une pince présentant deux tronçons latéraux prévus pour enserrer ladite barre omnibus, disposés respectivement de part et d'autre de chacune de deux ouvertures d'extrémité opposées.

Selon d'autres caractéristiques préférées, pour les mêmes raisons :
- au moins un desdits appareils comporte au moins un compartiment dans lequel est immobilisé une borne à insertion adaptée à recevoir ladite barre omnibus ;
- ledit compartiment s'ouvre vers l'extérieur exclusivement par lesdites ouvertures d'extrémité et par une ouverture horizontale ménagée dans ladite face supérieure ou dans ladite face inférieure ;
- ladite borne à insertion comporte un pavé par lequel elle est immobilisée dans ledit compartiment.

Selon d'autres caractéristiques préférées, pour les même raisons :
- au moins un desdits appareils électriques comporte au moins un compartiment dans lequel est mobile suivant la direction avant-arrière un coulisseau en matière isolante renfermant une borne à insertion adaptée à recevoir ladite barre omnibus, ledit coulisseau présentant une ouverture d'accès pour cette barre et admettant au moins deux positions de service distinctes, respectivement une première position de service dans laquelle ladite ouverture d'accès est alignée avec une première ouverture d'extrémité ménagée en bordure dans une face principale et avec une première ouverture d'extrémité ménagée en bordure dans l'autre face principale alors que ledit compartiment comporte, entre une deuxième ouverture d'extrémité ménagée en bordure dans ladite face principale et une deuxième ouverture d'extrémité ménagée en bordure dans ladite autre face principale, une portion vide, et une deuxième position de service dans laquelle ladite ouverture d'accès est alignée avec lesdites deuxièmes ouvertures alors que ledit compartiment comporte entre lesdites premières ouvertures une portion vide ;
- ledit compartiment est délimité à gauche et à droite par une paroi de laquelle saille une nervure de guidage du coulisseau orientée suivant la direction avant-arrière, des rainures correspondantes étant ménagées dans ledit coulisseau ;
- ladite nervure est prévue en bordure de chaque dite paroi délimitant ledit compartiment ;
- ladite borne à insertion est disposée dans un creux interne audit coulisseau, lequel a globalement une conformation annulaire à profil rectangulaire ;
- ladite borne à insertion est reliée à l'une des extrémités d'un conducteur souple ;
- ledit conducteur souple est une tresse ;
- ledit compartiment est ouvert sur le dessus ;
- ledit compartiment est partiellement fermé sur le dessus par deux retours ;
- ledit coulisseau comporte au moins une encoche permettant l'insertion d'un outil tel qu'un tournevis à lame plate afin de le déplacer ; et/ou
- ledit coulisseau comporte une dite encoche à l'avant et à l'arrière.

Dans un premier mode de réalisation préféré pour un des appareils électriques que comporte l'ensemble selon l'invention, cet appareil électrique comporte :
- un compartiment dans lequel est immobilisé une borne à insertion adaptée à recevoir ladite barre omnibus ; et
- un compartiment dans lequel est mobile un coulisseau en matière isolante renfermant une borne à insertion adaptée à recevoir ladite barre omnibus, ledit coulisseau présentant une ouverture d'accès pour cette barre et admettant trois positions de service distinctes, respectivement une position la plus en arrière, une position intermédiaire et une position la plus en avant, avec dans la position la plus arrière ladite ouverture d'accès qui est alignée avec deux premières ouvertures d'extrémité opposées ménagées en bordure respectivement dans une face principale et dans l'autre phase principale, avec dans la position intermédiaire ladite ouverture d'accès qui est alignée avec deux deuxièmes ouvertures d'extrémité opposées ménagées en bordure respectivement dans une face principale et dans l'autre face principale et avec dans la position la plus en avant ladite ouverture d'accès qui est alignée avec deux troisièmes ouvertures d'extrémité opposées ménagées en bordure respectivement dans une face principale et dans l'autre face principale, ledit compartiment dans lequel est mobile un coulisseau comportant dans ladite position la plus en arrière une portion vide entre lesdites deuxièmes ouvertures et entre lesdites troisièmes ouvertures, dans ladite position intermédiaire une portion vide entre lesdites premières ouvertures et lesdites troisièmes ouvertures, et dans ladite position la plus en avant, une portion vide entre lesdites premières ouvertures et entre lesdites deuxièmes ouvertures.

De préférence, pour des questions pratiques et de conformité aux règles de sécurité, ledit compartiment dans lequel est immobilisée une borne à insertion est en arrière dudit compartiment dans lequel est mobile un coulisseau.

Dans un deuxième mode de réalisation préféré d'un des appareils électriques que comporte l'ensemble selon l'invention, cet appareil comporte un compartiment dans lequel est mobile un coulisseau en matière isolante renfermant une borne à insertion adaptée à recevoir ladite barre omnibus, ledit coulisseau présentant une ouverture d'accès pour cette barre et admettant quatre positions de service distinctes, respectivement une position la plus en arrière, une position intermédiaire arrière, une position intermédiaire avant et une position la plus en avant, avec dans la position la plus en arrière ladite ouverture d'accès qui est alignée avec deux premières ouvertures d'extrémité opposées ménagées en bordure respectivement dans une face principale et dans l'autre phase principale, avec dans la position intermédiaire arrière ladite ouverture d'accès qui est alignée avec deux deuxièmes ouvertures d'extrémité opposées ménagées en bordure respectivement dans une face principale et dans l'autre face principale, avec dans la position intermédiaire avant ladite ouverture d'accès qui est alignée avec deux troisièmes ouvertures d'extrémité opposées ménagées en bordure respectivement dans une face principale et dans l'autre face principale et avec dans la position la plus en avant ladite ouverture d'accès qui est alignée avec deux quatrièmes ouvertures d'extrémité opposées ménagées en bordure respectivement dans une face principale et dans l'autre face principale, ledit compartiment comportant dans ladite position la plus arrière une portion vide entre lesdites deuxièmes ouvertures, entre lesdites troisièmes ouvertures et entre lesdites quatrièmes ouvertures, dans ladite position intermédiaire arrière une portion vide entre lesdites premières ouvertures, entre lesdites troisièmes ouvertures et entre lesdites quatrièmes ouvertures, dans ladite position intermédiaire avant, une portion vide entre lesdites premières ouvertures, entre lesdites deuxièmes ouvertures et entre lesdites quatrièmes ouvertures, et dans ladite position la plus en avant, une portion vide entre lesdites premières ouvertures, entre lesdites deuxièmes ouvertures et entre lesdites troisièmes ouvertures.

De préférence, pour des raisons pratiques de mise en oeuvre utiles dans une installation électrique triphasée, au moins un desdits appareils comporte plusieurs dits compartiments dans lequel est mobile un dit coulisseau, lesdits compartiments étant disposés côte-à-côte.

Selon d'autres caractéristiques préférées, pour des raisons pratiques de mise en oeuvre de l'alimentation de la barre omnibus à partir de câbles :
- au moins un desdits appareils comporte plusieurs bornes à insertion chacune adaptée à recevoir une dite barre omnibus et chacune immobilisée, lesdites bornes à insertion étant disposées les unes derrière les autres ;
- ledit appareil électrique comportant plusieurs bornes à insertion chacune immobilisée, est un auxiliaire de signalisation ; et/ou
- ledit appareil électrique comportant plusieurs bornes à insertion chacune immobilisée, est un adaptateur de raccordement par réglette omnibus.

Selon d'autres caractéristiques préférées de mise en oeuvre des appareils électriques appartenant à l'ensemble selon l'invention, pour des raisons de simplicité et de commodité :
- au moins un desdits appareils électriques comporte sur une même face supérieure ou inférieure, des orifices donnant accès à des bornes à insertion pour une dite barre omnibus et des orifices donnant accès à des bornes à insertion pour un câble électrique ;
- au moins un desdits appareils électriques comporte sur une même face supérieure ou inférieure, des orifices donnant accès à des bornes à insertion pour une dite barre omnibus et des orifices donnant accès à des bornes à vis pour un câble électrique ;
- ledit appareil électrique comporte d'un côté de l'échancrure de fixation sur ledit rail de support, une saillie vers l'arrière ;
- c'est dans la partie supérieure de chaque dit appareil qui est adapté à recevoir une portion à introduire de chaque dite barre omnibus ;
- l'ensemble comporte un appareil de tête de groupe protégeant les autres appareils alimentés par chaque dite barre omnibus ; et/ou
- l'ensemble comporte un appareil auquel sont connectés des câbles d'alimentation électrique et ladite barre omnibus en parallèle, de sorte que ladite barre omnibus n'est pas protégée par un appareil de tête de groupe.

Selon d'autres caractéristiques préférées de mise en oeuvre du rail de support, pour des questions de simplicité, de commodité et d'économie, ledit rail de support est à profil en Ω.

### BREVE DESCRIPTION DES DESSINS

L'exposé de l'invention sera maintenant poursuivi par la description détaillée d'exemples de réalisation, donnée ci-après à titre illustratif et non limitatif, en référence aux dessins annexés. Sur ceux-ci :
- la figure 1 est une vue en perspective d'un ensemble de distribution pour installation électrique monophasée, formé par une réglette omnibus bipolaire, par un rail de support à profil en Ω normalisé et par une rangée d'appareils électriques au format modulaire montrés en place sur le rail, la réglette omnibus étant montrée à l'écart de la rangée d'appareils ;
- la figure 2 est une vue semblable à la figure 1, mais avec la réglette omnibus en place dans la rangée d'appareils ;
- les figures 3 et 4 sont des vues en perspective, prises sous des angles différents, d'un des disjoncteurs modulaires appartenant à la rangée d'appareils illustrée sur les figures 1 et 2 ;
- la figure 5 est une vue en perspective d'une des bornes à insertion que comporte ce disjoncteur ;
- la figure 6 est une autre vue en perspective de ce disjoncteur, dont certains éléments ont été enlevés afin d'en montrer la structure interne ;
- la figure 7 est une vue similaire à la figure 5, mais où a été enlevée une entretoise centrale de ce disjoncteur ;
- les figures 8 et 9 sont des vues semblables aux figures 1 et 2, mais pour un ensemble de distribution pour installation électrique triphasée, la réglette omnibus étant tétrapolaire ;
- la figure 10 est une vue en perspective d'un appareil (bloc différentiel adaptable) que comporte l'ensemble illustré sur les figures 8 et 9, cet appareil servant à la fois de déclencheur différentiel et d'adaptateur de raccordement par réglette omnibus ;
- les figures 11 et 12 sont des vues en perspective montrant, sous deux angles différents, un adaptateur simple de raccordement par réglette omnibus, jouant le même rôle que l'appareil illustré sur la figure 10, mais sans servir de déclencheur différentiel ;
- les figures 13 et 14 sont des vues semblables aux figures 8 et 9, mais pour un ensemble où les bornes à vis d'arrivée de courant de l'appareil de tête de groupe sont situées en partie inférieure tandis que sa partie supérieure est adaptée à coopérer avec la réglette omnibus, l'appareil voisin de l'appareil de tête de groupe servant uniquement de déclencheur différentiel ;
- les figures 15 et 16 sont des vues semblables aux figures 8 et 9, mais pour un ensemble où les appareils autres que l'appareil de tête de groupe comportent en partie supérieure, en outre des bornes à insertion pour la réglette omnibus, des bornes à insertion pour des câbles ;
- la figure 17 est une vue en perspective d'un ensemble de distribution en deux rangées où chaque appareil comporte en partie supérieure, en outre des bornes à insertion pour une réglette omnibus, des bornes à vis pour des câbles, quatre câbles de raccordement étant prévus pour alimenter la rangée inférieure à partir de la rangée supérieure ;
- la figure 18 est une vue en perspective d'un des disjoncteurs monophasés bipolaires que comporte l'ensemble illustré sur la figure 17 ;
- la figure 19 est une vue semblable, mais montrant un disjoncteur unipolaire ;

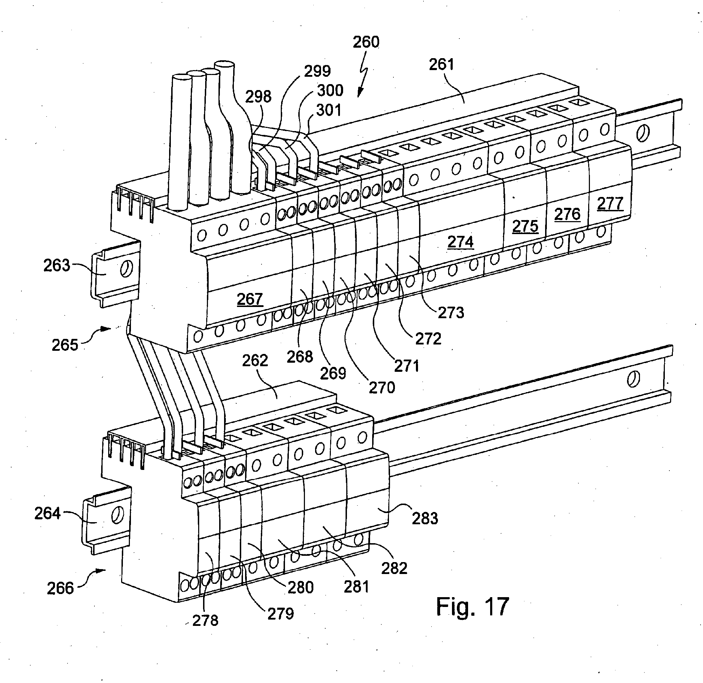

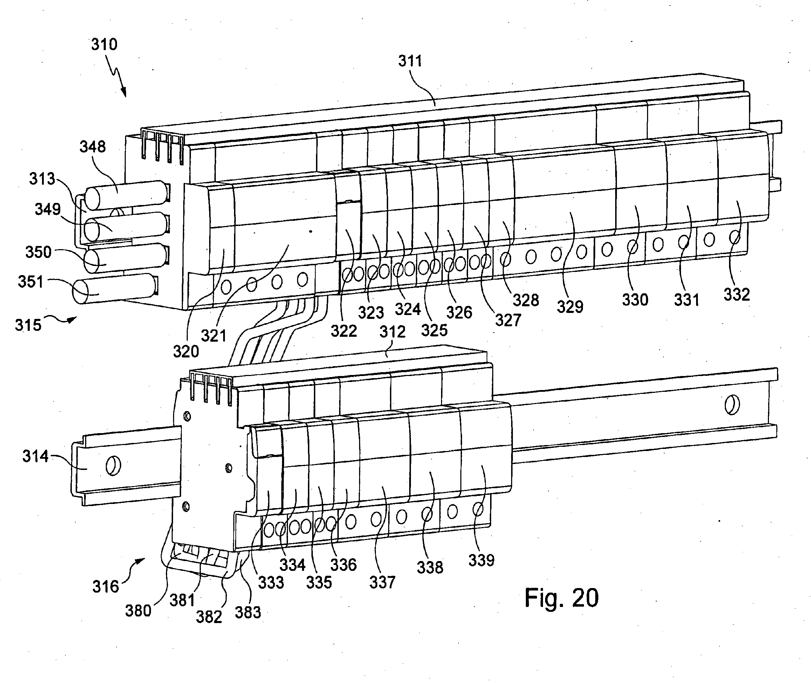

- la figure 20 est une vue semblable à la figure 17, mais pour un ensemble où les appareils des deux rangées comportent en partie supérieure uniquement des bornes à insertion pour une réglette omnibus, la rangée supérieure comportant un adaptateur de raccordement présentant dans l'une de ses faces principales des ouvertures donnant chacune accès à une borne à vis pour un câble d'arrivé, la rangée supérieure et la rangée inférieure comportant chacune un adaptateur de raccordement comportant dans sa face inférieure des ouvertures donnant accès à une borne à vis pour un câble de raccordement, ces deux adaptateurs étant reliés l'un à l'autre par des câbles de raccordement pour alimenter la rangée inférieure à partir de la rangée supérieure ;
- les figures 21 et 22 sont des vues en perspective de l'adaptateur de raccordement à ouvertures d'accès dans une face principale, prises respectivement du côté de l'une et de l'autre des faces principales, la figure 22 montrant cet adaptateur avec son couvercle frontal relevé ; et
- les figures 23 et 24 sont des vues semblables aux figures 21 et 22, mais pour l'adaptateur à ouvertures d'accès situées dans sa face inférieure.

### DESCRIPTION DETAILLEE D'UN EXEMPLE DE REALISATION

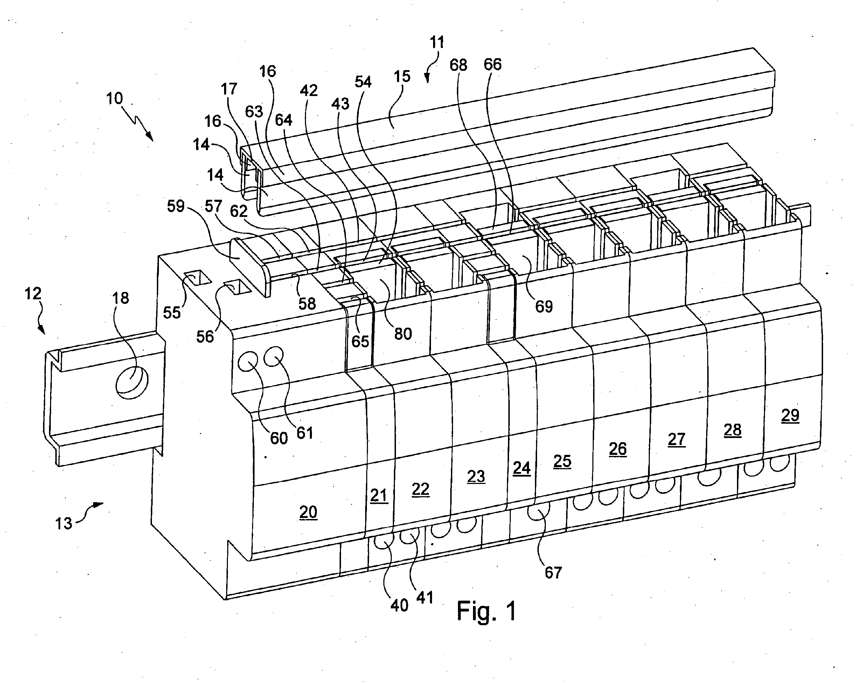

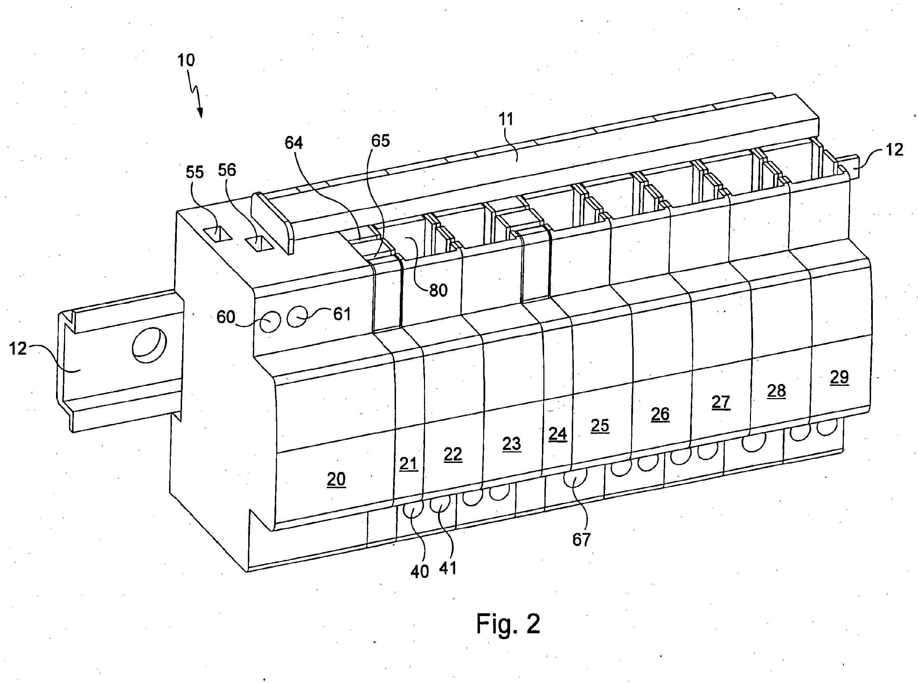

L'ensemble de distribution 10 illustré sur les figures 1 et 2 est prévu pour une installation électrique monophasée (un pôle de neutre et un seul pôle de phase).

Cet ensemble comporte une réglette omnibus 11, un rail de support 12 et une rangée 13 d'appareils électriques chacun au format modulaire.

La réglette 11 est prévue pour répartir horizontalement, entre des appareils tels que ceux de la rangée 13, le pôle de neutre et le pôle de phase. Elle comporte deux barres omnibus 14 et une embase 15.

Chacune des barres omnibus 14 est en matériau métallique bon conducteur de l'électricité. Elle est en forme de bande plate continue dont l'extrémité longitudinale que l'on voit en bas sur la figure 1 est légèrement effilée.

L'embase 15 est en matière plastique isolante. Elle comporte deux gouttières 16 dans chacune desquelles est engagée et fixée une respective des barres omnibus 14, par l'extrémité longitudinale que l'on voit en haut sur la figure 1, c'est-à-dire l'extrémité longitudinale opposée à l'extrémité effilée. Les gouttières 16 sont réunies par une platine 17 de largeur constante.

L'embase 15 maintient ainsi les deux barres omnibus 14 dans une position où elles sont en regard et parallèle l'une à l'autre.

La réglette 11 ne comporte aucun autre élément à l'extérieur ou entre les gouttières 16. Elle a ainsi un profil globalement en U dont les deux branches parallèles correspondent aux barres omnibus 14 et dont la branche centrale correspond à l'embase 15.

Dans l'exemple illustré, l'embase 15 est surmoulée sur les barres omnibus 14, ce qui assure leur assujettissement mutuel. En variante, l'embase 15 est moulée de façon séparée et les barres omnibus 14 sont engagées à force et/ou collées dans les gouttières 16.

La partie de chaque barre omnibus 14 qui émerge d'une gouttière 16 est prévue pour être reçue dans les appareils de la rangée 13. Le caractère effilé de l'extrémité longitudinale inférieure facilite l'introduction dans les appareils.

Comme on le voit sur la figure 2, lorsque la réglette 11 est en place dans la rangée d'appareil 13, l'embase 15 vient contre, ou en tout cas à proximité immédiate, de la face supérieure des appareils de cette rangée.

Le rail 12 est ici en matière métallique. Il présente un profil normalisé en Ω . Il est prévu pour être fixé horizontalement directement sur un mur ou sur le bâti d'une enveloppe telle qu'un coffret, un tableau ou une armoire dans laquelle doit être reçu l'ensemble de protection.

Pour sa fixation, le rail 12 présente plusieurs trous 18, pour le passage d'un organe de fixation tel qu'une vis.

La rangée 13 comporte, à partir de l'extrémité que l'on voit à gauche sur les figures 1 et 2, un interrupteur différentiel bipolaire 20, un auxiliaire de signalisation 21, un disjoncteur bipolaire 22, auquel est associé l'auxiliaire 21, un autre disjoncteur bipolaire 23, un autre auxiliaire de signalisation 24, un disjoncteur unipolaire 25, auquel est associé l'auxiliaire 24, deux disjoncteurs bipolaires 26 et 27, un autre disjoncteur unipolaire 28 et un autre disjoncteur bipolaire 29.

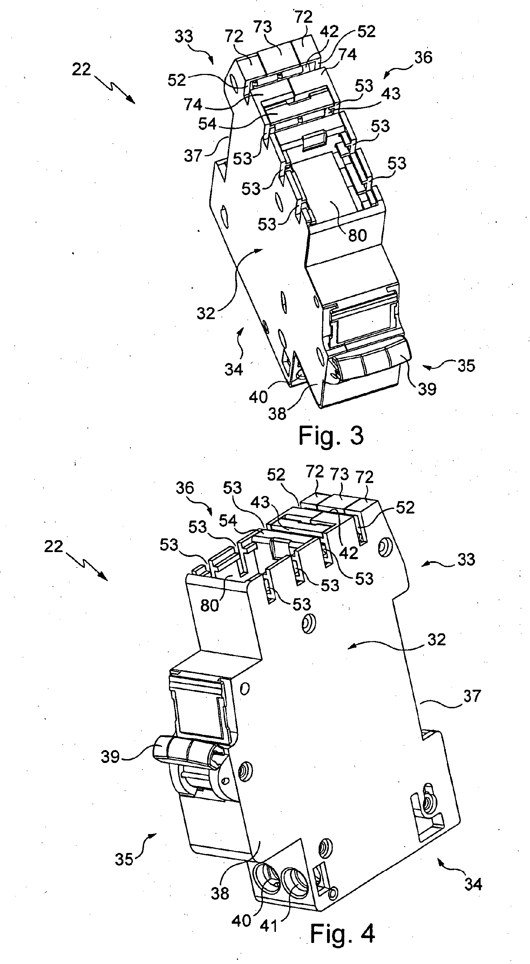

On va maintenant décrire plus particulièrement le disjoncteur bipolaire 22, à l'appui des figures 3 et 4.

Le disjoncteur 22 a une forme globalement parallélépipédique.

Il présente deux faces principales 32 et des faces latérales s'étendant de l'une à l'autre des faces principales 32, à savoir une face arrière 33, une face inférieure 34, une face avant 35 et une face supérieure 36.

La face arrière 33 présente une échancrure 37 pour le montage du disjoncteur 22 sur un rail normalisé à profil en Ω tel que le rail 12.

La face inférieure 34 présente deux orifices d'accès à des bornes à vis non visibles sur les dessins.

La face avant 35 présente, en position centrale, sur à peu près la moitié de sa longueur, un nez 38 présentant un levier de manoeuvre 39 (non représenté sur les figures 1 et 2, où les appareils 20 à 29 sont dessinés de façon simplifiée pour ne pas surcharger le dessin). Sous le nez 38 se trouvent deux orifices 40 et 41 permettant chacun d'accéder à la tête de la vis de l'une des bornes pour lesquelles un orifice d'accès est ménagé dans la face inférieure 34.

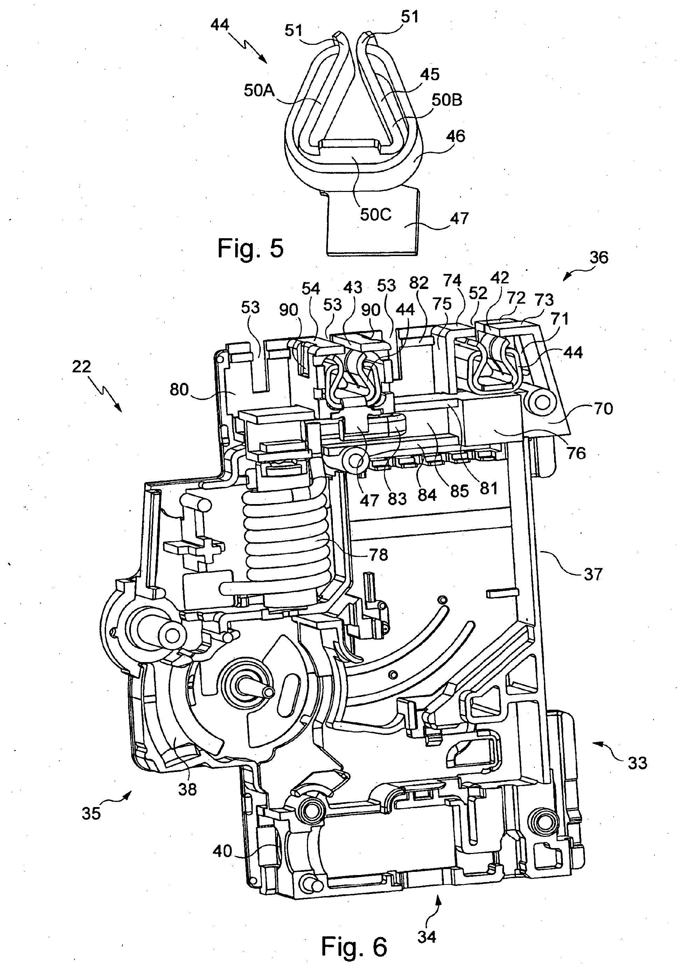

La face supérieure 36 présente des ouvertures horizontales 42 et 43 donnant chacune accès à l'une des deux bornes à insertion 44 (figure 5) que comporte le disjoncteur 22.

Chaque borne 44 comporte une pince 45, un ressort 46 et un pavé de montage et de raccordement 47.

La pince 45 est en matériau métallique bon conducteur de l'électricité, ici en cuivre étamé. Elle est en forme générale de lyre. Elle présente deux tronçons latéraux 50A et 50B se raccordant chacun par une extrémité à une extrémité respective d'un tronçon intermédiaire 50C globalement rectiligne. Les tronçons 50A et 50B sont ici symétriques, c'est-à-dire que l'un est l'image miroir de l'autre.

A partir de leur extrémité opposée au tronçon intermédiaire 50C, c'est-à-dire à partir de leur extrémité distale, les tronçons 50A et 50B se rapprochent l'un de l'autre jusqu'à une zone d'inflexion 51 où ils sont les plus proches l'un de l'autre. Entre la zone d'inflexion 51 et le tronçon intermédiaire 50C, les tronçons 50A et 50B s'écartent l'un de l'autre.

Le ressort 46 est en matériau métallique présentant une bonne élasticité, ici en acier à ressort. Il a une forme générale en C. Il entoure étroitement la portion de la pince 45 comportant le tronçon intermédiaire 50C et la partie de chacun des tronçons 50A et 50B située entre le tronçon 50C et la zone d'inflexion 51, les extrémités du ressort 46 portant chacune contre la face externe de l'un des tronçon 50A et 50B au niveau de la zone d'inflexion 51.

Le pavé 47 est ici fait d'une seule pièce avec la pince 45, à laquelle il se raccorde par la tranche du tronçon intermédiaire 50C située à l'arrière sur la figure 5, au niveau d'un décrochement en léger débord identique à celui qu'on voit à l'avant sur la figure 5.

Le pavé 47 est plat et s'étend suivant un plan parallèle à celui suivant lequel sont globalement orientés la pince 45 et le ressort 46. Le pavé 47 est disposé, par rapport au tronçon intermédiaire 50C, du côté opposé à celui où se trouvent les tronçons 50A et 50B, c'est-à-dire qu'il est disposé du côté qu'on voit en bas.

Le pavé 47 permet d'opérer la fixation mécanique de la borne 44 dans le disjoncteur 22 et le raccordement électrique de la borne 44 au circuit interne au disjoncteur 22.

On notera que la borne 44 est montrée de façon très schématique sur la figure 5, notamment en ce qui concerne le contour du pavé 47, qui est en réalité plus complexe.

Chaque borne 44 est disposée dans le disjoncteur 22 parallèlement aux faces principales 32 avec les extrémités distales des tronçons 50A et 50B situées à proximité de la face supérieure 36, l'espace entre les tronçons 50A et 50B, prévu pour accueillir une portion d'une barre omnibus telle que 14, étant aligné avec l'ouverture 42 ou avec l'ouverture 43.

Chacune des bornes 44 constitue une borne d'entrée pour l'un des pôles d'une source de courant alternatif, ici un pôle de neutre et un pôle de phase.

La borne 44 à laquelle donne accès à l'ouverture 42 est prévue pour recevoir une barre omnibus telle que 14 portée au potentiel de neutre tandis que la borne 44 à laquelle donne accès l'ouverture 43 est prévue pour recevoir une barre omnibus telle que 14 portée au potentiel de phase.

Les ouvertures 42 et 43 sont étroites et s'étendent suivant la direction gauche-droite de l'une à l'autre des faces principales 32. La largeur de chacune des ouvertures 42 et 43 est semblable (légèrement supérieure) à l'épaisseur des barres omnibus telles que 14.

Pour permettre l'insertion d'une telle barre, l'ouverture 42 se raccorde, à chaque extrémité, à une ouverture supplémentaire 52 ménagée dans une respective des faces principales 32. De même, l'ouverture 43 se raccorde à chaque extrémité à une ouverture 53 ménagée dans une respective des faces principales 32.

Ici, chacune des ouvertures d'extrémité 52 et 53 est orientée verticalement et présente, de même que les ouvertures horizontales 42 et 43, une largeur semblable (légèrement supérieure) à l'épaisseur des barres omnibus telles que 14.

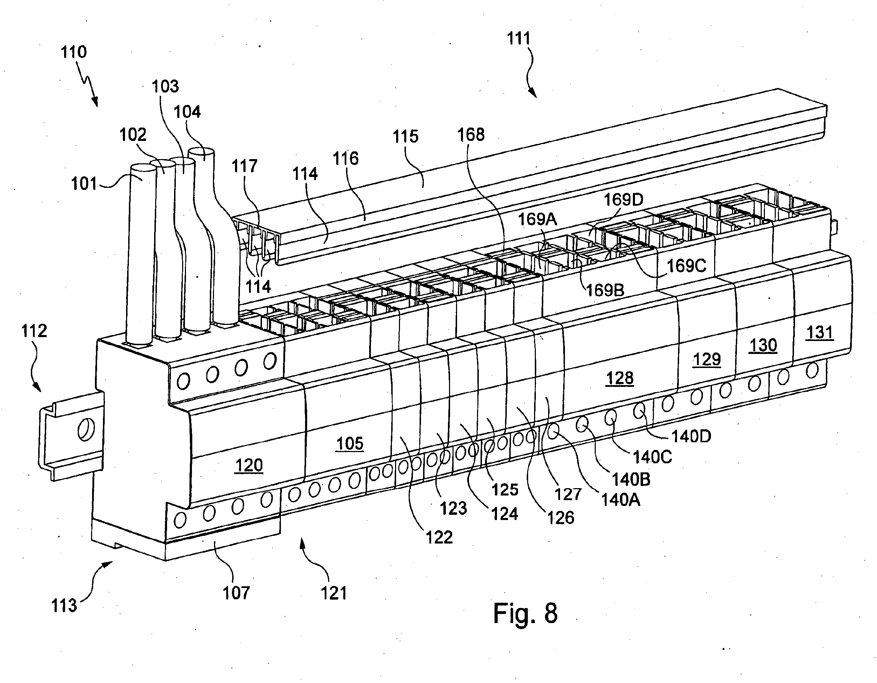

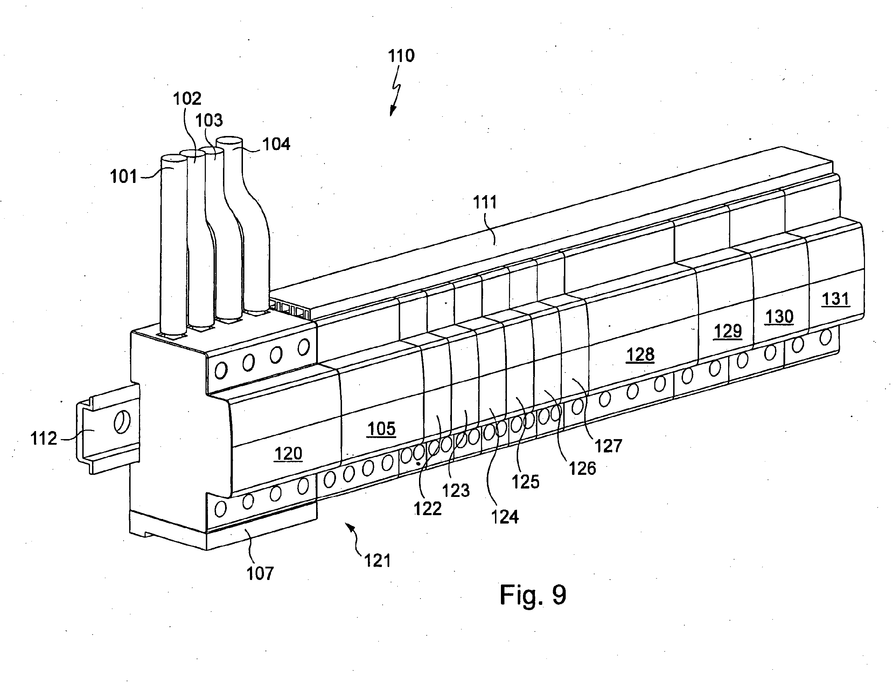

On notera que pour permettre au disjoncteur 22 d'être employé dans un ensemble de distribution pour installation électrique triphasée, ainsi qu'on l'expliquera ultérieurement à l'appui notamment des figures 8 et 9, chacune des faces principales 32 présente deux autres ouvertures 53 chacune en regard de l'ouverture 53 de l'autre face principale 32.

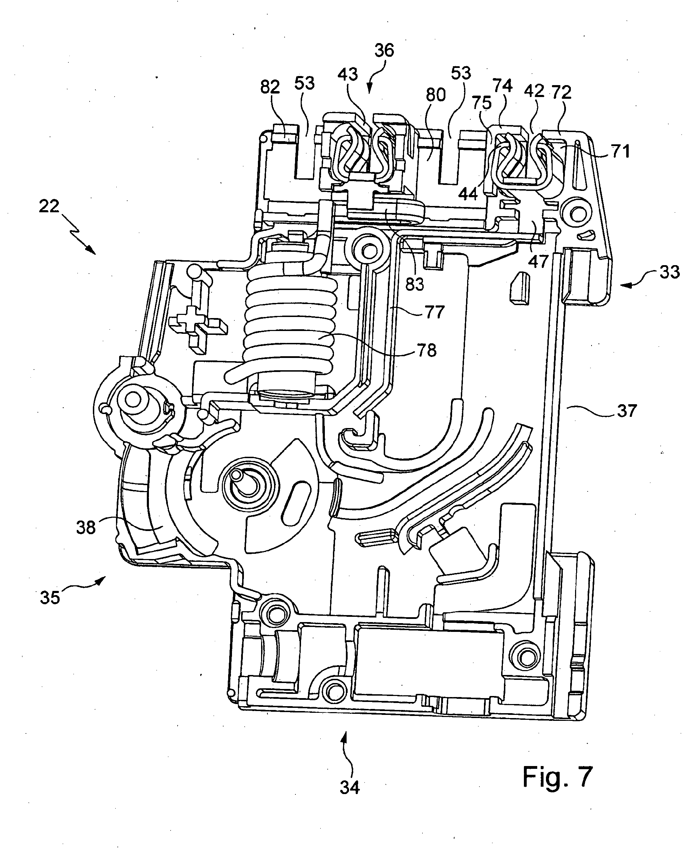

L'ouverture 43 et la borne 44 associée font partie d'un coulisseau 54 pouvant prendre sélectivement la position illustrée sur les figures 1 à 4 où l'ouverture 43 est alignée avec les ouvertures 53 qui sont le plus en arrière, la position illustrée sur les figures 6 et 7 où l'ouverture 43 est alignée avec les ouvertures 53 intermédiaires et une position où l'ouverture 43 est alignée avec les ouvertures 53 qui sont le plus en avant.

Les bornes à vis dont les orifices d'accès sont situés dans la face inférieure 34 et dont la commande s'effectue par les orifices 40 et 41 de la face avant 35, sont quant à elles des bornes de sortie vers une portion d'une installation électrique protégée par le circuit interne du disjoncteur 22, cette portion étant par exemple un circuit de prises de courant ou un circuit d'éclairage.

La borne dont la vis est accessible par l'ouverture 40 est ici prévue pour un câble de neutre et la borne dont la vis est accessible par l'orifice 41 est ici prévue pour un câble de phase.

Les éléments internes au disjoncteur 22 permettent, lorsque le levier 39 est relevé comme illustré sur les figures 3 et 4, d'établir une liaison électrique, d'une part, entre la borne à insertion à laquelle donne accès l'ouverture 42 et la borne dont la vis est accessible par l'orifice 40 et, d'autre part, entre la borne à insertion à laquelle donne accès l'ouverture 43 et la borne dont la vis est accessible par l'ouverture 41. En cas de surintensité importante (court-circuit) ou modérée mais persistante (surcharge), le mécanisme interne au disjoncteur 22 interrompt ces liaisons.

La rangée 13 d'appareils illustrée sur les figures 1 et 2 comporte comme appareil de tête de groupe, un interrupteur différentiel monophasé 20 disposé à l'extrémité de la rangée 13 que l'on voit à gauche sur les figures 1 et 2.

Tout comme le disjoncteur 22, l'interrupteur différentiel 20 est au format modulaire, mais alors que le disjoncteur 22 présente une largeur (écart entre les faces principales 32) égale à 1 module (environ 18 mm), l'interrupteur différentiel 20 présente une largeur de 2 modules (environ 36 mm).

L'interrupteur différentiel 20 présente, sur sa face supérieure, deux ouverture 55 et 56 donnant chacune accès à une borne à vis d'entrée pour un câble d'arrivé de courant et deux ouvertures 57 et 58 donnant chacune accès à une borne à insertion telle que la borne 44, pour le départ du courant, ces deux bornes à insertion étant prévues pour recevoir une barre omnibus telle que 14.

Les ouvertures 57 et 58 ont des caractéristiques dimensionnelles semblables aux ouvertures 42 et 43, leur longueur étant d'environ 1 module à partir de la face principale que l'on voit à droite sur les figures 1 et 2. Pour permettre la mise en place des barres omnibus telles que 14, cette face principale présente des ouvertures semblables aux ouvertures 52 et 53 se raccordant à leur sommet respectivement à l'ouverture 57 et à l'ouverture 58.

Entre, d'une part, les ouvertures 55 et 56 et, d'autre part, les ouvertures 57 et 58, il saille de la face supérieure de l'interrupteur différentiel 20 une cloison d'isolation 59 entre les câbles d'arrivée de courant et les barres omnibus telles que 14.

Pour la commande des vis des bornes auxquelles donnent accès respectivement l'ouverture 55 et l'ouverture 56, il est prévu dans la face avant de l'interrupteur différentiel 20 des orifices respectifs 60 et 61.

Ici, les bornes auxquelles donnent accès les ouvertures 55 et 57 sont prévues pour le pôle de neutre tandis que les bornes auxquelles donnent accès les ouvertures 56 et 58 sont prévues pour le pôle de phase.

Ainsi, la barre omnibus 14 que l'on voit en arrière sur la figure 1 est portée au pôle de neutre par l'appareil 20 et répartit ce pôle entre les appareils de la rangée 13. La barre omnibus 14 que l'on voit à l'avant est portée au pôle de phase par l'appareil 20 et répartit ce pôle entre les appareils de la rangée 13.

L'auxiliaire de signalisation 21 associé au disjoncteur 22 présente une largeur de 0,5 module (environ 9 mm).

Pour permettre la mise en place des barres omnibus telles que 14, l'auxiliaire 21 présente dans sa face supérieure deux ouvertures 62 et 63 qui, tout comme les ouvertures 42 et 43, se raccordent, à chaque extrémité, à une ouverture supplémentaire ménagée dans une respective des faces principales de l'auxiliaire 21.

Pour permettre d'utiliser l'auxiliaire 21 dans un ensemble de distribution pour installation triphasée, tel que l'ensemble décrit ultérieurement à l'appui des figures 8 et 9, la face supérieure de l'auxiliaire 21 présente deux autres ouvertures 64 et 65 se raccordant elles aussi à des ouvertures ménagées dans les faces principales respectives.

Le disjoncteur 23 et l'auxiliaire 24 sont identiques respectivement au disjoncteur 22 et à l'auxiliaire 21.

Le disjoncteur 25 est semblable au disjoncteur 22, si ce n'est qu'il est unipolaire (il est prévu pour un seul pôle de phase ou de neutre). En conséquence, le disjoncteur 25 présente dans sa face supérieure une seule ouverture 66 donnant accès à une borne à insertion d'arrivée tandis que sa face inférieure présente une seule ouverture donnant accès à une borne à vis de départ, cette vis pouvant être commandée par l'orifice 67 ménagé en bas de sa face avant.

Dans la configuration illustrée sur les figures 1 et 2, l'ouverture 66 est positionnée pour le pôle de phase.

Comme on l'expliquera ultérieurement, le disjoncteur 25 est configurable pour positionner différemment l'ouverture 66 afin qu'elle corresponde au pôle de neutre ou bien, pour permettre l'utilisation dans un ensemble de distribution pour installation triphasée, dans encore deux autres positions pour les deux pôles de phase supplémentaires.

Les disjoncteurs 26, 27 et 29 sont identiques au disjoncteur 22 tandis que le disjoncteur 28 est identique au disjoncteur 25.

Du fait que le rail 12 est continu et que, conformément au format modulaire, chacun des appareils 20 à 29 présente de faces principales plates, ces appareils peuvent être fixés sur le rail 12 en étant disposés côte-à-côte pour former la rangée 13.

Les diverses ouvertures prévues dans la face supérieure de ces appareils sont alors disposées en lignes.

Plus précisément, les ouvertures telles que 57, 62 et 42, situées le plus en arrière et donnant ici accès à une borne à insertion pour le pôle de neutre, sont alignées les unes avec les autres, les appareils dépourvus d'une telle borne, ici les disjoncteurs unipolaires 25 et 28 dont le coulisseau n'est pas dans la position la plus en arrière, présentant un creux et des ouvertures correspondantes dans leurs faces principales pour permettre la mise en place d'une barre omnibus de neutre telle que la barre 14 de la réglette 11 que l'on voit en arrière sur la figure 1 .

De même, les ouvertures telles que 58, 63 et 43, donnant accès à une borne à insertion pour le pôle de phase, sont alignées pour permettre la mise en place d'une barre omnibus de phase telle que la barre 14 de la réglette 11 que l'on voit en avant sur la figure 1.

Les autres ouvertures et creux présents sur les appareils 21 à 29 sont eux aussi disposés suivant deux lignes parallèles de sorte qu'une réglette semblable à la réglette 11 pourrait être mise en place dans les appareils 21 à 29 en avant de la réglette illustrée.

On notera que le caractère continu du rail 12, des barres omnibus 14 et des ouvertures prévues pour leur réception dans les appareils de la rangée 13 offre une flexibilité totale de positionnement longitudinal de ces appareils.

En particulier, aucune difficulté n'est causée par les auxiliaires de signalisation 21 et 24 qui présentent une largeur différente d'un nombre entier de modules, en l'occurrence une largeur de 0,5 module ; au contraire de ce qui se passerait si l'on utilisait des barres omnibus conventionnelles en forme de peigne présentant des dents régulièrement réparties suivant un pas égal à 1 module et des appareils dont la face supérieure est munie d'un orifice pour recevoir une dent respective du peigne, le décalage de 0,5 module créé par un auxiliaire tel que 21 ayant pour effet que les orifices des appareils situées au-delà d'un tel auxiliaire ne se retrouveraient pas en face des dents du peigne.

Plus généralement, le caractère continu du rail et des barres omnibus permet de choisir librement la largeur des appareils individuels.

On observera toutefois que le choix de largeurs égal à un nombre entier de modules offre l'avantage de permettre à ces appareils d'être utilisé avec un peigne conventionnel, les bornes à insertion 44 pouvant aussi bien recevoir une dent d'un peigne conventionnel qu'une portion d'une barre omnibus continue telle que 14.

On va maintenant décrire en détails, à l'appui des figures 6 et 7, la partie supérieure du disjoncteur 22.

Pour montrer la structure interne du disjoncteur 22, celui-ci est représenté sur la figure 6 dans un état où a été enlevé un certain nombre d'éléments, en particulier le carter latéral que l'on voit à droite sur les figures 3 et 4, les bornes à vis situées en partie inférieure, le mécanisme pour établir ou interrompre les liaisons électriques entre les bornes à vis situées en partie inférieure et les bornes à insertion situées en partie supérieure ainsi que les griffes saillant dans l'échancrure 37 pour la fixation du disjoncteur 22 à un rail tel que 12.

Sur la figure 7, il a en outre été enlevé une entretoise 70 que comporte le disjoncteur 22 entre ses deux carters latéraux.

La borne à insertion 44 située à l'arrière du disjoncteur 22 est logée dans un compartiment 71 s'ouvrant vers l'extérieur par les ouvertures 42 et 52.

Comme on le voit plus particulièrement sur les figures 3 et 4, l'ouverture 42 est délimitée à l'arrière par deux retours 72 appartenant chacun à un respectif des carter latéraux et par un retour 73 appartenant à l'entretoise 70.

Les retours 72 saillent d'une paroi principale du disjoncteur 22 tandis que le retour 73 saille d'une paroi arrière.

A l'avant, l'ouverture 42 est délimitée par deux retours 74 qui saillent d'une paroi principale et se rejoignent au centre du disjoncteur 22.

Chaque retour 74 se raccorde en équerre à une paroi transversale 75 de même largeur, qui sert à fermer le compartiment 71 vers l'avant.

En bas, le compartiment 71 est fermé par un bloc 76 appartenant à l'entretoise 70.

Les différentes parois qui délimitent ainsi le compartiment 71 isolent électriquement la borne 44 située à l'arrière.

Ainsi qu'on le voit plus particulièrement sur la figure 7, le pavé 47 de la borne 44 située à l'arrière est raccordé à une piste 77 en matériau bon conducteur de l'électricité. L'extrémité de la piste 77 opposée au pavé 47 est prévue pour être raccordée à l'un des contacts du mécanisme servant à établir ou interrompre les liaisons électriques entre les bornes du disjoncteur 22.

La borne 44 située à l'arrière est immobilisée dans le compartiment 71, notamment par l'engagement de son pavé 47 dans un renfoncement de la paroi principale visible sur les figures 6 et 7 et par le soutien que procure le bloc 76 de l'entretoise 70.

La borne 44 située à l'avant, c'est-à-dire la borne à laquelle donne accès l'ouverture 43, est disposée dans un creux interne au coulisseau 54, lequel a globalement une conformation annulaire à profil rectangulaire.

La borne 44 à laquelle donne accès l'ouverture 43 est isolée par le coulisseau 54 et par les parois principales du disjoncteur 22.

Le coulisseau 54 est mobile suivant la direction avant-arrière dans un compartiment 80 ouvert sur le dessus, délimité à droite et à gauche par une respective des parois principales du disjoncteur 22 et délimité en bas par une paroi 81 de l'entretoise 70.

Pour le guidage du coulisseau 54, il saille de chaque paroi principale, à proximité de son extrémité supérieure, une nervure 82 orientée suivant la direction avant-arrière, des rainures correspondantes étant ménagées dans le coulisseau 54. Il existe également, entre la paroi 81 et chaque paroi principale, un creux formant rainure dans lequel est engagé une patte saillante du coulisseau 54.

Le pavé 47 de la borne 44 à laquelle donne accès l'ouverture 43 passe également au travers de l'une de ces rainures. Sous la paroi 81, le pavé 47 est relié à l'une des extrémités d'un conducteur souple 83, ici une tresse, l'autre extrémité de ce conducteur souple étant reliée à l'une des extrémités de la bobine 78 de détection de court-circuit.

Pour isoler électriquement la tresse 83, l'entretoise 70 présente une paroi 84 parallèle à la paroi 81 et une paroi 85 s'étendant entre les parois 84 et 81.

Le caractère souple du conducteur 83 lui permet de se déformer lorsque le coulisseau 54 est déplacé dans le compartiment 80, cette borne 44 restant connectée en permanence au reste du disjoncteur 22.

Le coulisseau 54 est prévu pour prendre sélectivement, dans le compartiment 80, une des trois positions où l'ouverture 43 est alignée avec deux ouvertures 53 opposées l'une à l'autre.

Dans la position la plus en arrière, illustrée sur les figures 1 à 4, le coulisseau 54 est contre ou à proximité immédiate de la paroi 75. Dans la position la plus en avant, le coulisseau 54 est contre ou à proximité immédiate de la paroi avant du disjoncteur 22. Pour faciliter le déplacement du coulisseau 54, il est prévu sur celui-ci, à l'avant comme à l'arrière, une encoche 90 (figure 6) permettant l'insertion d'un outil tel qu'un tournevis à petite lame plate.

Pour faciliter le repérage des bonnes positions et pour y maintenir le coulisseau 54, il est prévu des moyens d'indexation non représentés.

Cette mobilité du coulisseau 54, et donc de la borne d'arrivée du pôle de phase dans le disjoncteur 22, permet l'utilisation de celui-ci pour n'importe quelle phase d'un ensemble de distribution pour installation électrique triphasée où la répartition horizontale de l'énergie électrique se fait par une réglette omnibus tétrapolaire, comme par exemple dans l'ensemble 110 illustré sur les figures 8 et 9.

La partie supérieure du disjoncteur unipolaire 25 est semblable à la partie supérieure du disjoncteur bipolaire 22, si ce n'est qu'il n'existe pas de compartiment tel que 71 mais un compartiment 69 unique allant vers l'arrière jusqu'à l'emplacement correspondant au compartiment 71, le coulisseau 68 pouvant ainsi prendre une position où l'ouverture 66 est alignée avec l'ouverture 42 du disjoncteur 22.

Ainsi, le coulisseau 68 mobile dans le compartiment 69 peut prendre sélectivement quatre positions distinctes, respectivement une position la plus en arrière, une position intermédiaire arrière, une position intermédiaire avant et une position la plus en avant.

On notera que la ou les portion(s) vide(s) du compartiment 80 (portion(s) non occupée(s) par le coulisseau 54) permet la réception d'une barre omnibus telle que 14 entre deux ouvertures 53 opposées. Il en va plus généralement de même pour les compartiments et ouvertures ménagées dans les faces principales des disjoncteurs 23 et 25 à 29.

L'ensemble 110 illustré sur les figures 8 et 9 comporte une réglette omnibus tétrapolaire 111, un rail de support 112 et une rangée 113 d'appareils électriques chacun au format modulaire.

La réglette 111 est prévue pour répartir horizontalement, entre des appareils tels que ceux de la rangée 113, le pôle de neutre et les trois pôles de phase. Elle comporte quatre barres omnibus 114 et une embase 115.

Chacune des barres omnibus 114 est identique aux barres 14 de la réglette 11.

L'embase 115 est semblable à l'embase 15, si ce n'est qu'elle comporte quatre gouttières 116 réunies deux à deux par une platine 117, les gouttières 116 et les platines 117 étant semblables respectivement aux gouttières 16 et à la platine 17 de la réglette 11.

L'embase 115 maintient ainsi les quatre barres omnibus 114 dans une position où elles sont parallèles les unes aux autres.

De même que la réglette 11, la réglette 111 ne comporte aucun autre élément à l'extérieur ou entre les gouttières 116. Elle a ainsi, pour chaque couple de deux barres 114 en regard, un profil globalement en U dont les deux branches parallèles correspondent à ces barres omnibus 114 et dont la branche centrale correspond à la portion de l'embase 115 réunissant ces deux barres.

Le rail 112 est identique au rail 12.

La rangée 113 comporte à partir de l'extrémité que l'on voit à gauche sur les figures 8 et 9, un disjoncteur tétrapolaire 120, un bloc différentiel adaptable 121, six disjoncteurs bipolaires 122 à 127, un disjoncteur tétrapolaire 128 et trois disjoncteurs bipolaires 129 à 131.

Les disjoncteurs bipolaires 122 à 127 sont identiques au disjoncteur 22.

Comme on le voit sur la figure 8, le coulisseau tel que 54 des disjoncteurs 122 et 125 est dans la position la plus en arrière, ces disjoncteurs étant prévus pour des circuits secondaires monophasés disposés entre le pôle de neutre et le pôle de première phase.

Le coulisseau des disjoncteurs 123 et 126 est dans la position intermédiaire, ces disjoncteurs étant prévus pour des circuits secondaires monophasés disposés entre le pôle de neutre et le pôle de deuxième phase.

Enfin, le coulisseau des disjoncteurs 124 et 127 est dans la position la plus en avant, ces disjoncteurs étant prévus pour des circuits secondaires monophasés disposés entre le pôle de neutre et le pôle de troisième phase.

Le disjoncteur tétrapolaire 128 présente dans sa partie supérieure quatre compartiments 169A, 169B, 169C et 169D semblables au compartiment 69 : il est prévu entre deux compartiments voisins une paroi de séparation présentant des ouvertures semblables aux ouvertures ménagées dans les parois principales.

Dans chacun des compartiments 169A, 169B, 169C et 169D est mobile un coulisseau 168 semblable au coulisseau 68 et pouvant, comme lui, prendre sélectivement quatre positions de service distinctes, respectivement une position la plus en arrière, une position intermédiaire arrière, une position intermédiaire avant et une position la plus en avant.

Dans chaque position de service, l'ouverture d'accès du coulisseau s'étend entre une ouverture ménagée dans une face principale et une ouverture pratiquée au travers d'une paroi de séparation (compartiments extrêmes 169A et 169D) ou entre deux ouvertures ménagées au travers d'une paroi de séparation (compartiments centraux 169B et 169C)

Dans la configuration illustrée sur les figures 8 et 9, le coulisseau 168 du compartiment 169A est prévu pour le pôle de neutre et est dans la position la plus en arrière, le coulisseau du compartiment 169B est prévu pour le pôle de première phase et est dans la position intermédiaire arrière, le coulisseau du compartiment 169C est prévu pour le pôle de deuxième phase et est dans la position intermédiaire avant et le coulisseau du compartiment 169D est prévu pour le pôle de troisième phase et est dans la position la plus en avant.

Le disjoncteur tétrapolaire 128 présente dans sa face inférieure des ouvertures (non visibles) donnant accès à quatre bornes à vis pour des câbles, chacune pour un pôle respectif. Les orifices 140A, 140B, 140C et 140D permettent de commander respectivement la vis de la borne reliée, intérieurement au disjoncteur 128, à la borne à insertion du coulisseau disposé dans le compartiment 169A, dans le compartiment 169B, dans le compartiment 169C et dans le compartiment 169D.

Le disjoncteur tétrapolaire 128 présente une largeur de 4 modules.

Les disjoncteurs bipolaires 129 à 131 présentent une largeur de 2 modules. Chacun est globalement semblable à une moitié du disjoncteur 128.

Ainsi, la partie supérieure de chacun des disjoncteurs 129, 130 et 131 présente deux compartiments dans chacun desquels est mobile un coulisseau pouvant prendre les mêmes positions que les coulisseaux 168 du disjoncteur 128.

Dans la configuration illustrée sur les figures 8 et 9, pour chacun des disjoncteurs 129, 130 et 131, le coulisseau du compartiment de gauche est dans la position la plus en arrière, afin que la borne à insertion qu'il renferme soit portée au potentiel de neutre.

Pour le disjoncteur 129, le coulisseau que l'on voit à droite est dans la position intermédiaire arrière, la borne à insertion qu'il renferme étant prévue pour être portée au potentiel de première phase.

Pour le disjoncteur 130, le coulisseau que l'on voit à droite est dans la position intermédiaire avant, la borne qu'il renferme étant prévue pour être portée au potentiel de deuxième phase.

Enfin, pour le disjoncteur 131, le coulisseau que l'on voit à droite est dans la position la plus en avant, la borne qu'il renferme étant prévue pour être portée au potentiel de troisième phase.

Le disjoncteur tétrapolaire 120, qui constitue l'appareil de tête de groupe de la rangée 113, a une largeur de 4 modules. Il présente dans sa face supérieure quatre orifices donnant accès à des bornes à vis respectivement pour le câble d'arrivée de neutre 101, pour le câble d'arrivée de première phase 102, pour le câble d'arrivée de deuxième phase 103 et pour le câble d'arrivée de troisième phase 104.

La face inférieure du disjoncteur tétrapolaire est semblable à sa face supérieure : elle comporte quatre orifices disposés de la même façon, donnant accès à des bornes à vis de départ.

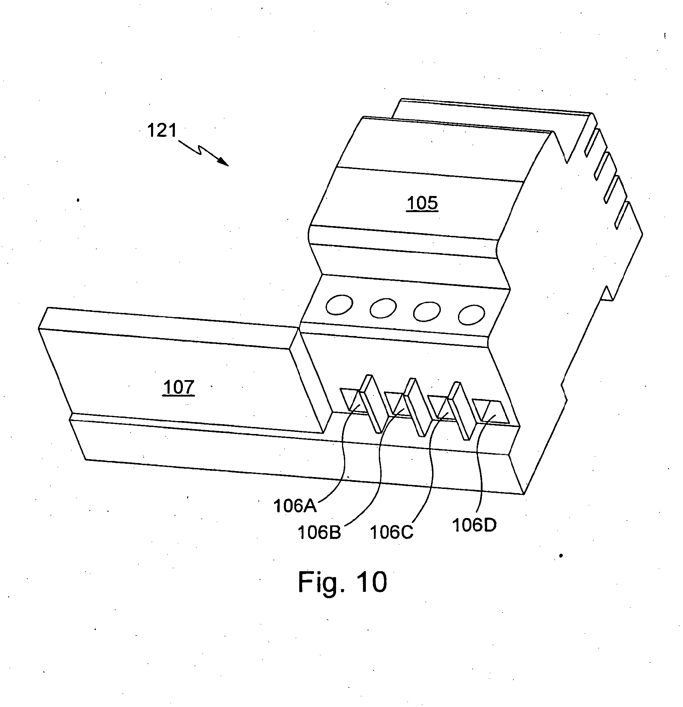

Le bloc différentiel adaptable 121, représenté de façon isolée sur la figure 10, comporte un corps 105 au format modulaire ayant une largeur de 3 modules.

La partie supérieure du corps 105 est semblable à la partie supérieure du disjoncteur 128, avec quatre compartiments dans chacun desquels est mobile un coulisseau renfermant une borne à insertion.

Dans la configuration illustrée sur les figures 8 et 9, les coulisseaux du corps 105 sont disposés de la même façon que les coulisseaux du disjoncteur 128, c'est-à-dire que le coulisseau du compartiment le plus à gauche est dans la position la plus en arrière et que les coulisseaux des compartiments suivants sont successivement dans la position intermédiaire arrière, dans la position intermédiaire avant et dans la position la plus en avant.

Comme on le voit sur la figure 10, le corps 105 du bloc 121 présente dans sa face inférieure des ouvertures 106A, 106B, 106C et 106D donnant chacune accès à une borne à vis de départ de courant. Ces bornes à vis sont utiles par exemple pour des câbles de raccordement permettant d'alimenter, à partir de la rangée 113, une autre rangée d'appareils appartenant au même groupe protégé par le disjoncteur 120 et le déclencheur différentiel logé dans le corps 105 du bloc 121.

Bien entendu, c'est au disjoncteur 120 qu'est associé le déclencheur différentiel logé dans le corps 105 : lorsque ce déclencheur différentiel détecte un défaut, il fait déclencher, par action mécanique, le disjoncteur 120 (comme tout déclencheur, le déclencheur logé dans le corps 105 n'a pas de contacts internes).

En outre du corps 105, le bloc 121 comporte une semelle 107 saillant du corps 105 au-delà de la face principale de ce corps située à gauche et saillant légèrement vers le bas au-delà de la face inférieure du corps 105.

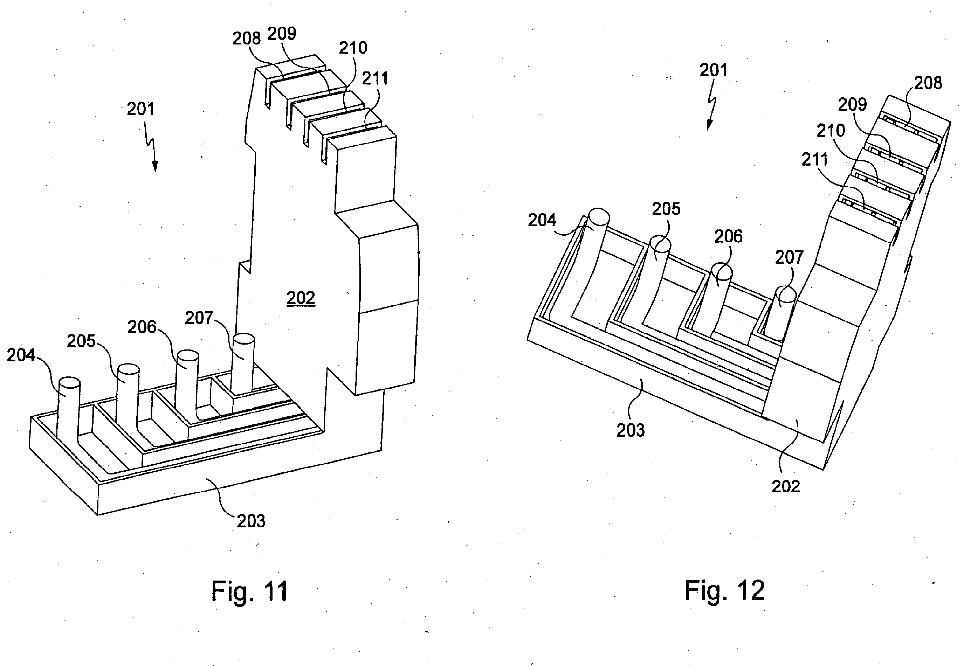

La semelle 107 présente des dents, non visibles sur la figure 10, mais semblables aux dents 204 à 207 de l'adaptateur simple illustré sur les figures 11 et 12, prévues pour être introduites dans les ouvertures situées dans la face inférieure du disjoncteur 120 afin d'être disposées dans les bornes à vis de départ de ce dernier.

Les quatre dents saillant de la face supérieure de la semelle 107 sont chacune reliées à une respective des bornes à insertion des coulisseaux prévus en partie supérieure, dans le même ordre suivant la direction gauche-droite, c'est-à-dire que la dent située le plus à gauche est reliée à la borne à insertion disposée dans le coulisseau mobile dans le compartiment situé le plus à gauche, et ainsi de suite.

On observera que la possibilité de choisir la position de chacun des quatre coulisseaux situés en partie supérieure du corps 105 offre une grande flexibilité dans le choix des pôles pour les quatre barres omnibus telles que les barres 114 de la réglette 111. Il est par exemple possible, quel que soit l'ordre de succession des pôles disponibles dans les bornes prévues dans la partie inférieure du disjoncteur 120, de porter la barre omnibus 114 la plus en arrière au pôle de neutre et de porter les trois autres barres, successivement vers l'avant, aux pôles de phase respectifs, dans l'ordre de leur numérotation.

On observera également que le caractère continu du rail 112, des barres omnibus 114 et des ouvertures prévues dans les appareils pour recevoir ces barres permet de disposer d'une certaine flexibilité d'agencement des appareils, en autorisant par exemple d'avoir un appareil à quatre compartiments en partie supérieure avec des largeurs différentes comme par exemple dans le corps 105 (largeur de 3 modules) et dans le disjoncteur 128 (largeur de 4 modules).

Bien entendu, d'autres largeurs sont possibles, y compris avec un nombre de modules qui n'est pas entier, par exemple, pour un appareil à quatre compartiments en partie supérieure, une largeur de 3,67 modules ou encore, pour un auxiliaire de signalisation tel que 21 et 24, une largeur de 0,83 module.

Dans les cas où la fonction de déclencheur différentiel est remplie par un autre appareil ou n'est pas utile, il est possible de remplacer le bloc 121 par l'adaptateur simple de raccordement par réglette omnibus 201 illustré sur les figures 11 et 12.

L'adaptateur 201 comporte un corps 202 au format modulaire, ayant une largeur de 1 module, et une semelle 203 saillant du corps 202 au-delà de sa face principale gauche, la semelle 203 présentant des dents 204 à 207 saillant verticalement au-dessus de sa face supérieure, ces dents étant prévues pour être introduites dans les ouvertures situées dans la face inférieure d'un appareil de tête tel que le disjoncteur 120.

Les dents 204 à 207 sont alignées longitudinalement suivant un pas (entraxe entre deux dents successives) constant, qui est ici de 1 module.

Ici, les dents 204 à 207 sont directement constituées par un tronçon d'extrémité d'un câble conducteur rigide cheminant dans un compartiment respectif de la semelle 203 puis du corps 202, l'autre extrémité de ces câbles étant connectée à une borne à insertion telle que la borne 44 située dans la partie supérieure du corps 202, les dents 204 à 207 étant ainsi connectées chacune à une borne à insertion à laquelle on accède respectivement par les ouvertures 208 à 211 ménagées dans la face supérieure du corps 202, ces ouvertures se prolongeant, comme pour les autres appareils décrits ci-dessus, dans les faces principales du corps 202.

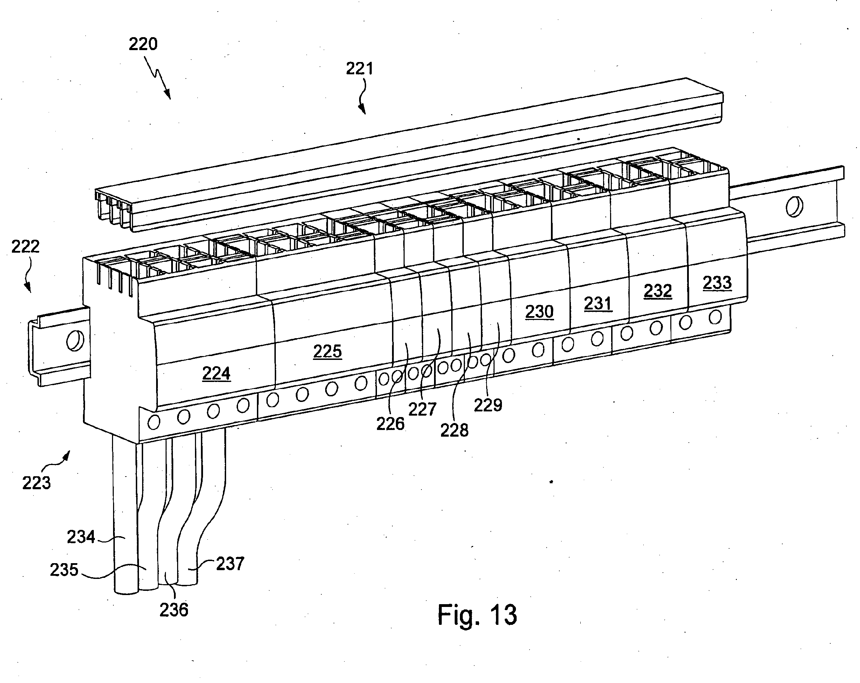

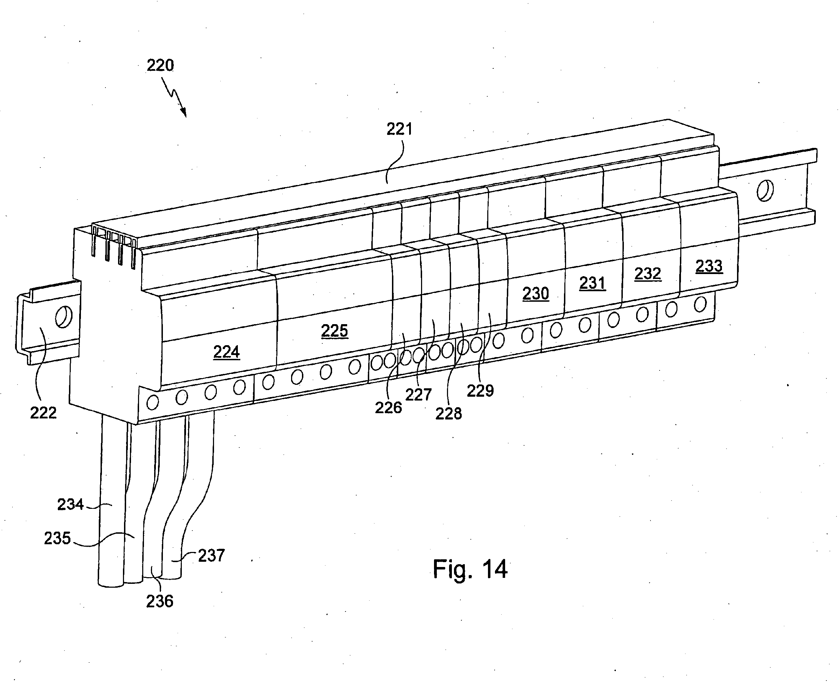

L'ensemble 220 illustré sur les figures 13 et 14 est prévu, de même que l'ensemble 110 illustré sur les figures 8 et 9, pour une installation électrique triphasée. Cet ensemble comporte une réglette omnibus 221, un rail de support 222 et une rangée 223 d'appareils électriques au format modulaire.

La réglette 221 est identique à la réglette 111, si ce n'est qu'elle est légèrement plus longue. La réglette 221 a la même longueur que la rangée 223.

Le rail 222 est identique aux rails 12 et 112, si ce n'est qu'il est légèrement plus long.

La rangée 223 comporte, à partir de l'extrémité que l'on voit à gauche sur les figures 13 et 14, un disjoncteur différentiel tétrapolaire 224 formant l'appareil de tête de groupe, un disjoncteur tétrapolaire 225 et huit disjoncteurs bipolaires 226 à 233.

Le disjoncteur différentiel 224 a une largeur de 4 modules. Il comporte en partie inférieure des bornes à vis pour des câbles d'alimentation 234 à 237 respectivement pour le pôle de neutre, le pôle de première phase, le pôle de deuxième phase et pôle de troisième phase. La partie supérieure du disjoncteur différentiel 224 est semblable à la partie supérieure du disjoncteur 128 de l'ensemble 111.

Le disjoncteur 225 est identique au disjoncteur 128 de l'ensemble 111. Les disjoncteurs 226 à 229 sont identiques au disjoncteur 22. Les disjoncteurs 230 à 233 sont identiques au disjoncteur 129.

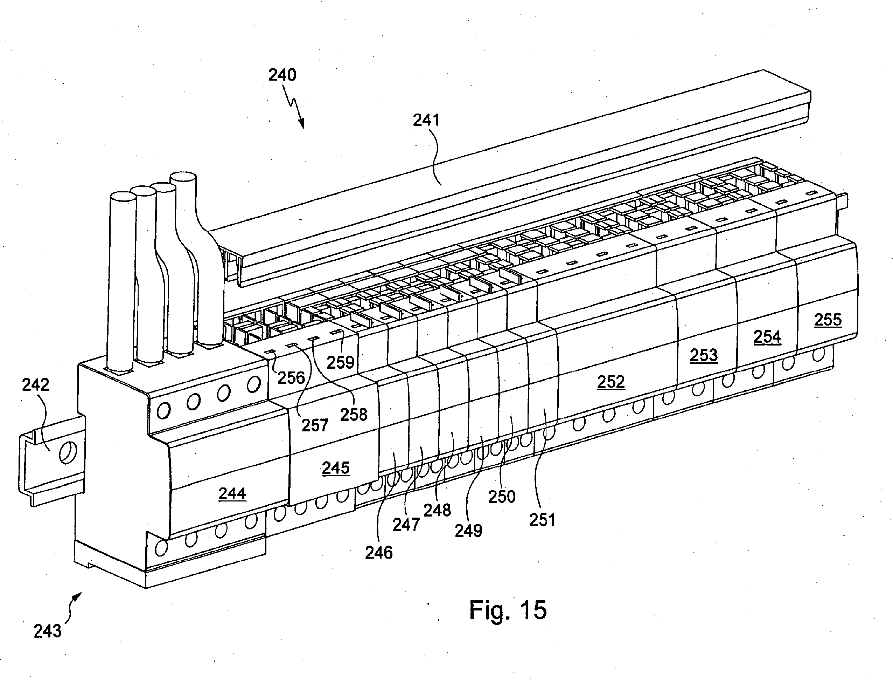

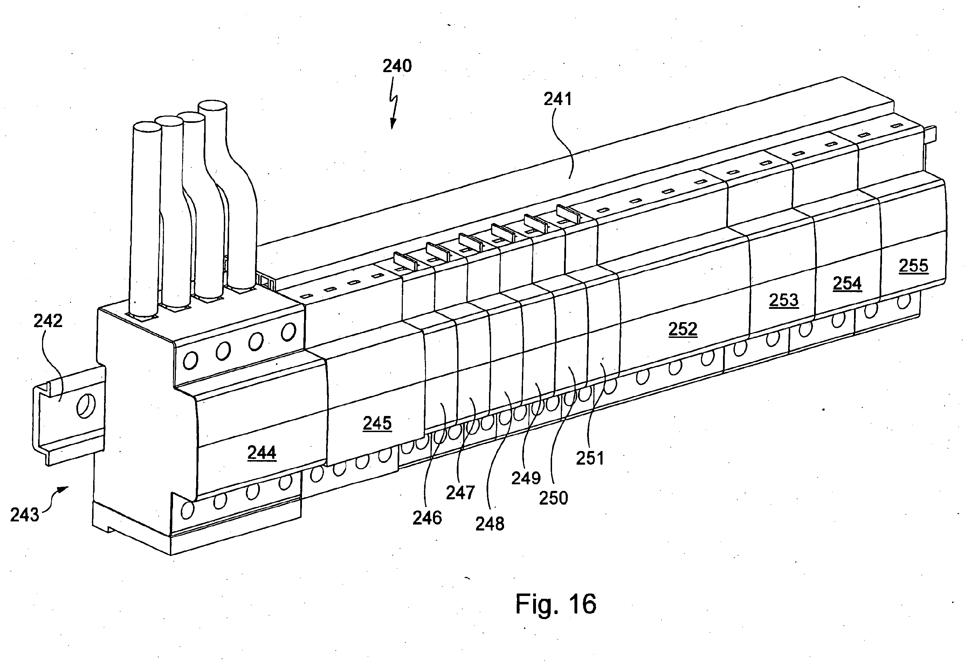

L'ensemble 240 illustré sur les figures 15 et 16 comporte, comme les ensembles 110 et 120 illustrés respectivement sur les figures 8 et 9 et sur les figures 13 et 14, une réglette omnibus tétrapolaire 241, un rail de support 242 et une rangée 243 d'appareils au format modulaire.

Le rail 242 et la réglette 241 sont semblables respectivement aux rails 12, 112 et 222 et aux réglettes 111 et 221.

D'une façon générale, les appareils de la rangée 243 sont identiques à ceux de la rangée 113 (figures 8 et 9), si ce n'est que les appareils autres que le disjoncteur de tête de groupe comportent en partie supérieure non seulement des bornes à insertion pour la réglette 241, mais aussi des bornes à insertion pour des câbles de raccordement.

La rangée 243 comporte ainsi, à partir de l'extrémité que l'on voit à gauche sur les figures 15 et 16, un disjoncteur tétrapolaire 244 en tant qu'appareil de tête de groupe, un bloc différentiel adaptable 245 associé au disjoncteur 244, six disjoncteurs bipolaires 246 à 251, un disjoncteur triphasé tétrapolaire 252 et trois disjoncteurs bipolaires 253 à 255.

Le disjoncteur 244 est identique au disjoncteur 120 de l'ensemble 110 (figures 8 et 9).

Le bloc 245 est identique au bloc 121, si ce n'est que la partie supérieure de son corps comporte en outre des bornes à insertion pour un câble de raccordement, ces bornes étant accessibles par des orifices 256 à 259 ménagés dans la face supérieure de ce corps.

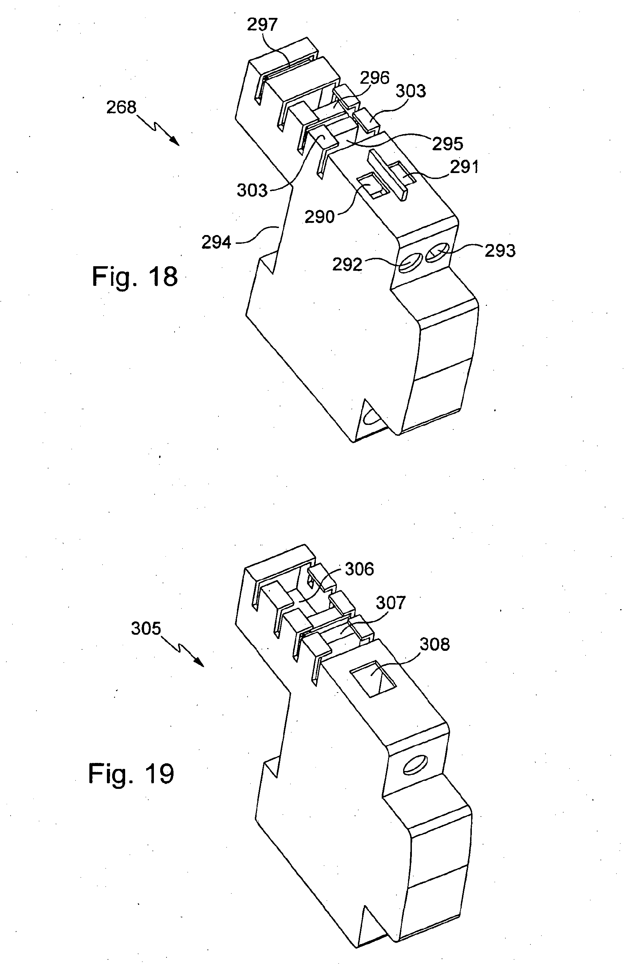

Plus généralement, les disjoncteurs 246 à 255 sont identiques aux disjoncteurs 122 à 131 de l'ensemble 110 (figures 8 et 9) si ce n'est que leur partie supérieure comporte de telles bornes à insertion, auxquelles donnent accès des orifices ménagés dans leur face supérieure ; et si ce n'est que les compartiments dans lesquels sont mobiles les coulisseaux tels que 154 ne sont pas entièrement ouverts au travers de la face supérieure, cette face supérieure comportant des petits retours surplombant les compartiments à gauche et à droite, de même que les disjoncteurs 268 et 305 décrits ultérieurement à l'appui des figures 18 et 19.

Les bornes à insertion pour des câbles de raccordement que comportent les appareils 245 à 255 permettent d'accueillir des câbles d'alimentation supplémentaires ou des câbles de repiquage permettant d'alimenter une rangée d'appareils à partir d'une autre rangée.

Ces bornes à insertion, et donc les orifices de la face supérieure qui y donnent accès, sont disposées à l'avant de la face supérieure de chacun des appareils 245 à 255.

On notera que la face arrière des appareils 245 à 255 présente au-dessus de son échancrure de fixation à un rail tel que 242, une portion qui n'est pas dans le même plan que la portion de la face arrière située en dessous de l'échancrure, mais dans un plan décalé vers l'arrière.

En d'autres termes, les appareils 245 à 255 présentent une portion saillant vers l'arrière au-dessus de l'échancrure de leur face arrière. La portion en saillie a une profondeur correspondant au supplément nécessaire pour loger les bornes à insertion pour les câbles de raccordement.

L'ensemble 260 illustré sur la figure 17 comporte deux réglettes omnibus tétrapolaire 261 et 262, deux rails de support 263 et 264 et deux rangées 265 et 266 d'appareils au format modulaire, la rangée 265 étant disposée au-dessus de la rangée 266.

Les réglettes 261 et 262 sont semblables aux réglettes 111, 221 et 241. Les rails 263 et 264 sont semblables aux rails 12, 112, 222 et 242.

Les appareils de la rangée supérieure 265 sont fixés sur le rail 263 et reçoivent la réglette 261. Les appareils de la rangée inférieure 266 sont fixés sur le rail 264 et reçoivent la réglette 262.

Chacun des appareils des rangées 265 et 266 comporte en partie supérieure non seulement des bornes à insertion pour une réglette omnibus tétrapolaire telle que 261 et 262, mais aussi des bornes à vis pour des câbles de raccordement.

La rangée 265 comporte, à partir de l'extrémité que l'on voit à gauche sur la figure 17, un disjoncteur différentiel tétrapolaire 267, six disjoncteurs bipolaires 268 à 273, un disjoncteur tétrapolaire 274 et trois disjoncteurs monophasés bipolaires 275 à 277.

La rangée 266 comporte, à partir de l'extrémité que l'on voit à gauche sur la figure 17, six disjoncteurs bipolaires 278 à 283.

Le disjoncteur bipolaire 268 est illustré isolément sur la figure 18.

Il présente dans sa face supérieure deux orifices 290 et 291 donnant chacun accès à une borne à vis. La face avant du disjoncteur 268 présente deux orifices 292 et 293 permettant de commander la vis des bornes auxquelles donnent accès respectivement l'orifice 290 et l'orifice 291.

La portion du disjoncteur 268 située au-dessus de l'échancrure 294 de fixation sur un rail de support tel que 263 ou 264 saille vers l'arrière de façon relativement importante, afin que la portion supérieure du disjoncteur 268 soit suffisamment longue pour loger à la fois les bornes à vis auxquelles donnent accès les orifices 290 et 291, le compartiment 295 dans lequel est mobile le coulisseau 296 logeant une borne à insertion telle que la borne 44 pour le pôle de phase et le compartiment 297 logeant une borne à insertion semblable pour le pôle de neutre.

Plus généralement, chacun des appareils 267 à 283 de l'ensemble 260 comporte une partie supérieure présentant une telle saillie vers l'arrière.

Le disjoncteur différentiel. 267 comporte dans sa partie supérieure des bornes à vis pour des câbles d'arrivée et des bornes à insertion pour recevoir les barres omnibus de la réglette 261. Ces bornes à vis et ces bornes à insertion sont disposées en parallèle les unes des autres : les barres telles que 114 de la réglette omnibus 261 sont directement reliées aux câbles d'arrivée respectifs.

Ainsi, le disjoncteur différentiel 267 joue le rôle d'un simple adaptateur de raccordement entre les câbles d'arrivée et les barres omnibus de la réglette 261, le disjoncteur différentiel 267 ne protégeant que le circuit divisionnaire connecté aux bornes à vis qu'il présente en partie inférieure (le disjoncteur différentiel 267 ne protège pas les autres appareils de l'ensemble 260 et ne joue donc pas le rôle d'un appareil de tête de groupe).

De même que pour le disjoncteur différentiel 267, dans chacun des autres appareils de l'ensemble 260, les bornes à vis situées en partie supérieure sont des bornes d'arrivée disposées en parallèle des bornes à insertion pour la réglette 261.

Les bornes à vis disposées en partie supérieure peuvent ainsi servir de borne de repiquage permettant d'alimenter une rangée à partir d'une autre rangée.

Ici, la rangée 266 est alimentée à partir de la rangée 265 grâce à quatre câbles de raccordement 298, 299, 300 et 301. Les câbles 298 et 299 sont connectés aux bornes à vis auxquelles donnent accès respectivement les orifices 290 et 291, de sorte que les câbles 298 et 299 sont portés respectivement au potentiel de neutre et au potentiel de première phase.

Les câbles 300 et 301 sont chacun disposés dans la borne à vis à laquelle donne accès l'orifice semblable à l'orifice 291 des disjoncteurs 269 et 270, de sorte que les câbles 300 et 301 sont portés respectivement au potentiel de deuxième de phase et au potentiel de troisième phase.

A leur autre extrémité, les câbles 298 à 301 sont raccordés aux disjoncteurs 278 à 280 de la même façon qu'ils sont raccordés aux disjoncteurs 268 à 270.

On notera que le compartiment 295 dans lequel est mobile le coulisseau 296 n'est pas entièrement ouvert au travers de la face supérieure, cette face supérieure comportant des petits retours 303 surplombant le compartiment 295 à gauche et à droite. De tels petits retours existent sur tous les appareils 267 à 283 de l'ensemble 260 (figure 17) et sur les disjoncteurs 246 à 255 de l'ensemble 240 (figures 15 et 16).

A ce jour, le mode de réalisation préféré est celui qui ne comporte pas de tels retours, comme pour les compartiments 69 et 80, les coulisseaux tels que 54 et 68 s'étendant jusqu'à la face supérieure et pouvant être guidés à translation à proximité de cette face supérieure, ce qui est favorable à la qualité de ce guidage à translation.

Le disjoncteur 305 illustré sur la figure 19 présente le même encombrement externe que le disjoncteur 268, mais, de même que le disjoncteur 25, il est monophasé, de sorte qu'il comporte un compartiment unique 306 dans lequel est mobile le coulisseau 307 renfermant une borne à insertion telle que la borne 44 tandis qu'il comporte, entre le compartiment 306 et la face avant, une seule borne à vis à laquelle donne accès un orifice 308 ménagé dans sa face supérieure.

L'ensemble 310 illustré sur la figure 20 comporte deux réglettes omnibus tétrapolaires 311 et 312, deux rails de support 313 et 314 et deux rangées 315 et 316 d'appareils au format modulaire, la rangée 315 étant disposée au-dessus de la rangée 316.

Les rails 313 et 314 sont semblables aux rails 12, 112, 222, 242, 263 et 264. Les réglettes 311 et 312 sont semblables aux réglettes 111, 221, 241, 261 et 262.

Les appareils de la rangée supérieure 315 sont fixés sur le rail 313 et reçoivent la réglette 311. Les appareils de la rangée inférieure 316 sont fixés sur le rail 314 et reçoivent la réglette 312.

Tout comme l'ensemble 220 illustré sur les figures 13 et 14, chacun des appareils de l'ensemble 310 comporte en partie supérieure uniquement des bornes à insertion pour une réglette omnibus tétrapolaire telle que 311 et 312.

La rangée supérieure 315 comporte, à partir de l'extrémité que l'on voit à gauche sur la figure 20, un adaptateur 320 de raccordement par réglette omnibus présentant dans sa face principale que l'on voit à gauche des ouvertures donnant chacune accès à une borne à vis pour un câble, un disjoncteur différentiel tétrapolaire 321, un adaptateur 322 de raccordement par réglette omnibus présentant dans sa face inférieure des ouvertures donnant chacune accès à une borne à vis pour un câble, six disjoncteurs bipolaires 323 à 328, un disjoncteur tétrapolaire 329 et trois disjoncteurs bipolaires 330 à 332.

La rangée 316 comporte, à partir de l'extrémité que l'on voit à gauche sur la figure 20, un adaptateur 333 de raccordement par réglette omnibus comportant dans sa face inférieure des ouvertures donnant accès à une borne à vis pour un câble et six disjoncteurs bipolaires 334 à 339.

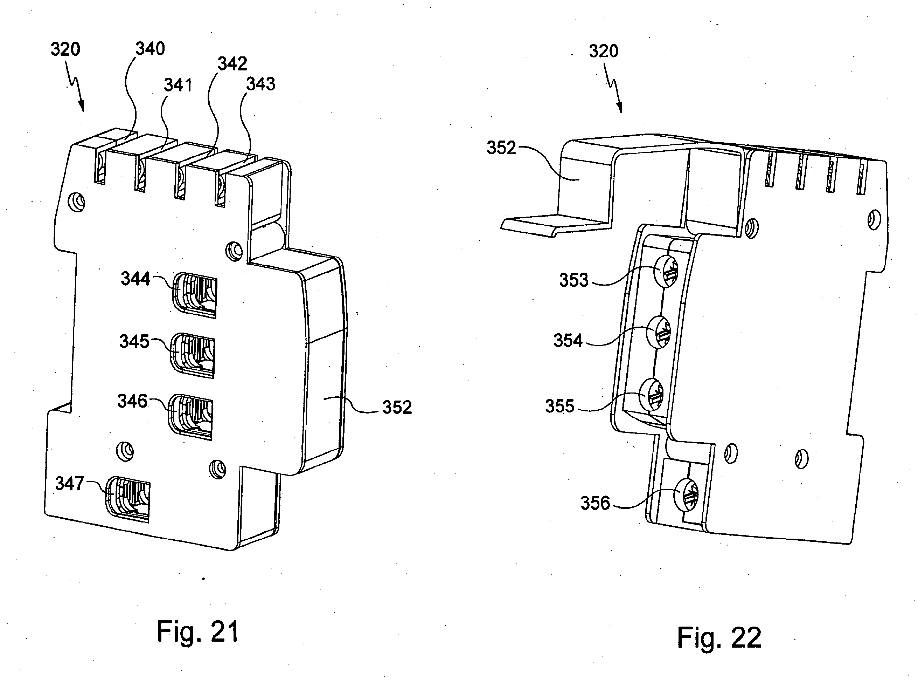

L'adaptateur de raccordement 320 est illustré isolément sur les figures 21 et 22.

De même que le corps 202 de l'adaptateur 201, l'adaptateur 320 a une largeur de 1 module et présente dans sa face supérieure quatre ouvertures 340 à 343 donnant chacune accès à une borne à insertion pour une barre omnibus telle que 114, prévue respectivement pour les quatre pôles d'une source d'énergie électrique triphasée.

La face principale de gauche de l'adaptateur 320 présente quatre ouvertures 344 à 347 donnant chacune accès à une borne de raccordement à vis pour un câble tel que les câbles 348 à 351 illustrés sur la figure 20.

Les bornes à insertion auxquelles donnent accès respectivement les ouvertures 340 à 343 sont reliées respectivement à la borne à vis à laquelle donne accès l'ouverture 347, l'ouverture 346, l'ouverture 345 et l'ouverture 344.

Pour permettre de commander la vis de ces dernières bornes, l'adaptateur 320 comporte un couvercle frontal 352 mobile entre la position rabattue illustrée sur la figure 21 et la position relevée illustrée sur la figure 22.

En position rabattue, le couvercle 352 masque des ouvertures 353 à 356 de commande des vis des bornes auxquelles donnent accès les ouvertures 344 à 347.

Les ouvertures 353, 354 et 355 sont ménagées dans le nez de l'adaptateur 320 et l'orifice 356 est ménagé sous ce nez.

On notera que l'adaptateur 320 permet de sélectionner les potentiels auxquels seront portés les bornes à insertion auxquelles donnent accès les ouvertures 340 à 343, en choisissant les dispositions des câbles tels que 348 à 351 portés à ces différents potentiels.

Le disjoncteur différentiel tétrapolaire 321 est identique au disjoncteur différentiel tétrapolaire 224 de l'ensemble 220 (figures 13 et 14).

On notera toutefois que le disjoncteur différentiel 321 ne joue pas le rôle d'un appareil de tête de groupe pour les autres appareils de l'ensemble 310, le disjoncteur différentiel 321 protégeant uniquement le circuit divisionnaire raccordé aux bornes à vis qu'il comporte dans sa partie inférieure.

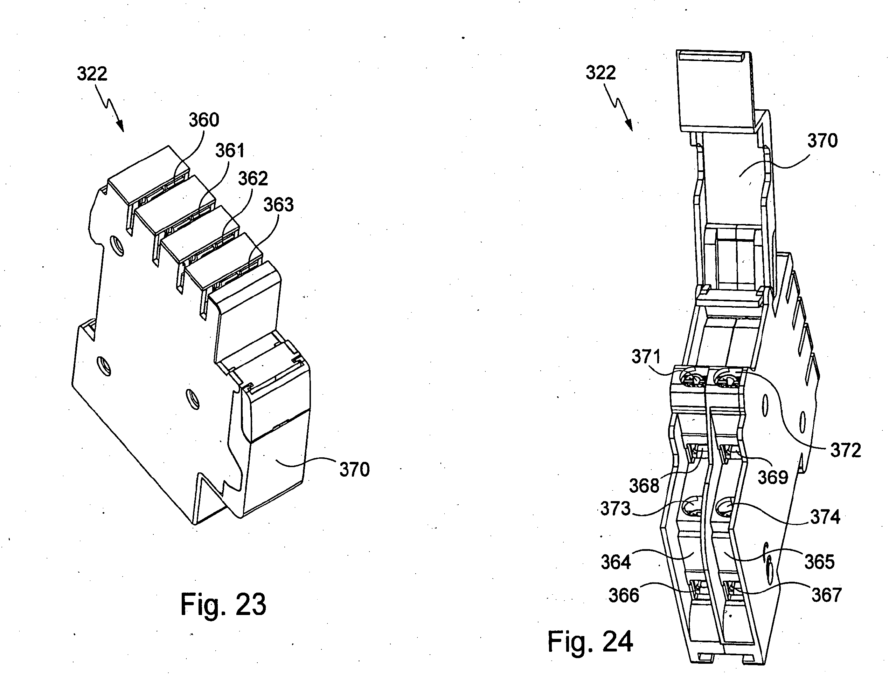

L'adaptateur de raccordement 322 est illustré isolément sur les figures 23 et 24.

De même que l'adaptateur 320, l'adaptateur 322 a une largeur de 1 module et présente dans sa face supérieure quatre ouvertures 360 à 363 donnant chacune accès à une borne à insertion pour une barre omnibus telle que 114, ces bornes à insertion étant prévues respectivement pour les quatre pôles d'une source d'énergie électrique triphasée.

La partie inférieure de l'adaptateur 322 comporte deux compartiments 364 et 365 débouchant à l'extérieur par une ouverture respective ménagée dans la face inférieure de l'adaptateur 322. Des orifices 366 à 369 donnant chacun accès à une borne à vis pour un câble débouchent dans les compartiments 364 et 365. Les câbles à raccorder peuvent donc accéder chacun à l'une de ces bornes à vis au travers de l'une des ouvertures ménagées dans la face inférieure, de l'un des compartiments 364 et 365 et de l'un des orifices 366 à 369.

Les bornes à insertion auxquelles donnent accès respectivement les ouvertures 360 à 363 sont reliées respectivement à la borne à vis à laquelle donne accès l'orifice 366, l'orifice 367, l'orifice 368 et l'orifice 369.

La paroi délimitant les compartiments 364 et 365 à l'avant est formée par un couvercle frontal 370 mobile entre la position rabattue illustrée sur la figure 23 et la position relevée illustrée sur la figure 24.

Les bornes à vis auxquelles donnent accès les ouvertures 368 et 369 sont disposées dans le nez de l'adaptateur 322, les orifices 371 et 372 de commande des vis de ces bornes étant disposés au-dessus des compartiments 364 et 365 et masqués par une portion du couvercle 370 formant la face avant du nez de l'adaptateur 322 en position rabattue.

Pour la commande des vis des bornes auxquelles donnent accès les orifices 366 et 367, il est prévu des orifices 373 et 374 débouchant dans les compartiments 364 et 365 au niveau de la partie fermée à l'avant par le couvercle 370 lorsqu'il est en position rabattue.

Le couvercle 370 est articulé au sommet du nez de l'adaptateur 322.

De même que l'adaptateur 320, l'adaptateur 322 permet de sélectionner les potentiels auxquels seront portées les bornes à insertion auxquelles donnent accès les ouvertures 360 à 363, en choisissant la disposition des câbles raccordés aux bornes à vis.

L'adaptateur 322 de la rangée 315 et l'adaptateur 333 de la rangée 316, qui est identique à l'adaptateur 322, sont raccordés l'un à l'autre par des câbles 380 à 383 qui permettent d'alimenter la rangée 316 à partir de la rangée 315. Chacun des câbles 380 à 383 est raccordé à chaque extrémité à une borne à vis ayant le même emplacement dans l'adaptateur 322 et dans l'adaptateur 333, de sorte que les pôles auxquels sont portées les barres omnibus de la réglette 312 sont disposés dans le même ordre que les pôles auxquels sont portées les barres omnibus de la réglette 311.

Les disjoncteurs bipolaires 323 à 328 et 334 à 336 sont identiques au disjoncteur 22. Le disjoncteur tétrapolaire 329 est identique au disjoncteur 128. Les disjoncteurs bipolaires 330 à 332 et 337 à 339 sont identiques au disjoncteur 129.

On notera que dans les différents appareils décrits ci-dessus, chaque borne à insertion disposée dans un coulisseau mobile est reliée à des éléments de protection électrique répondant à des caractéristiques du courant circulant par cette borne (surintensité, différentiel de courant, ...), de sorte que la flexibilité offerte dans le choix du pôle raccordé à une telle borne mobile est compatible avec les exigences de sécurité.

On notera également que dans les différents appareils décrits ci-dessus, les bornes à insertion immobilisées sont soit reliées en direct à une autre borne soit, comme par exemple la borne 44 immobilisée dans le compartiment 71 du disjoncteur 22, reliées à un élément de coupure répondant à des caractéristiques du courant circulant par une borne à insertion disposée dans un coulisseau (borne de phase), la position en arrière de la borne immobilisée permettant d'assurer qu'elle sera bien utilisée pour le pôle de neutre pour lequel elle est prévue.

On notera encore que dans les différents appareils décrits ci-dessus, les bornes de neutre sont disposées à gauche conformément aux pratiques de câblage de certains pays.

Dans des variantes non représentées, pour répondre aux pratiques de câblage d'autres pays, les bornes de neutre sont disposées à droite, les appareils étant modifiés en conséquence (par exemple, pour le disjoncteur 22, le circuit interne est modifié pour que ce soit la borne à vis située en partie inférieure à droite qui soit prévue pour être reliée par le circuit interne au disjoncteur à la borne immobilisée dans le compartiment tel que 71) ou étant directement compatible avec une telle utilisation (appareils dont les coulisseaux peuvent prendre sélectivement l'une de quatre positions distinctes).

Dans d'autres variantes non représentées, le nombre de positions de service qui peuvent être prises sélectivement par un coulisseau renfermant une borne est différent de trois ou quatre, par exemple deux positions de service (appareil de protection monophasé) ou davantage que quatre.

Dans d'autres variantes non représentées des appareils, le coulisseau, les compartiments et/ou les bornes sont différents, par exemple avec une autre conformation des bornes à insertion, telle qu'une conformation dissymétrique.

Dans des variantes non représentées, les barres omnibus telles que 14 ou 114 ne font pas partie d'une réglette omnibus bipolaire ou tétrapolaire telle que 11 ou 111, mais sont individuelles, voire nues, ou groupées différemment, par exemple, pour une installation triphasée, une réglette tripolaire pour les pôles de phase et une réglette unipolaire pour le pôle de neutre.

Dans d'autres variantes non représentées, les barres ou réglettes omnibus sont munies de bornes de raccordement à des câbles, afin de faciliter le raccordement à la source d'énergie électrique ou l'alimentation d'une rangée d'appareils par une autre rangée.

Dans encore d'autres variantes non représentées, les barres ou réglettes omnibus ne sont pas reçues dans la partie supérieure des appareils, mais dans leur partie inférieure.

Dans des variantes non représentées, le rail de support est différent, par exemple en matière plastique ou avec un autre profil, tel qu'un profil en G.

## Revendications

1. Ensemble de distribution pour installation électrique, comportant:
- au moins deux barres omnibus pour chacune répartir horizontalement un pôle respectif d'une source d'énergie électrique ;
- une pluralité d'appareils électriques chacun de forme générale parallélépipédique avec deux faces principales (32) et des faces latérales (33-36) s'étendant de l'une à l'autre des faces principales, la partie supérieure de chaque dit appareil ou la partie inférieure de chaque dit appareil étant adaptée à recevoir une portion à introduire respective de chaque dite barre omnibus; et
- un rail de support (12 ; 112 ; 222 ; 242 ; 263, 264 ; 313, 314) prévu pour être disposé horizontalement, lesdits appareils étant adaptés à former, lorsqu'ils sont fixés sur ledit rail de support, une rangée (13 ; 113 ; 223 ; 243 ; 265, 266 ; 315, 316) où ils sont disposés côte-à-côte, ledit rail de support et lesdites barres omnibus étant libres l'un par rapport aux autres, grâce à quoi lesdites barres omnibus peuvent être mises en place ou enlevées alors que lesdits appareils sont fixés au rail de support ;
chaque dite barre omnibus (14 ; 114) étant continue au niveau desdites portions à introduire, chaque dit appareil étant adapté à recevoir une première dite barre omnibus dans un espace s'étendant depuis une première ouverture d'extrémité (52) ménagée en bordure dans une face principale (32) jusqu'à une première ouverture d'extrémité (52) ménagée en bordure dans l'autre face principale (32), **caractérisé en ce que** chaque dit appareil est adapté à recevoir une deuxième dite barre omnibus dans un espace s'étendant depuis une deuxième ouverture d'extrémité (53) ménagée en bordure dans une face principale (32) jusqu'à une deuxième ouverture d'extrémité (53) ménagée en bordure dans l'autre face principale et **en ce que** lesdits appareils sont adaptés, lorsqu'ils forment une dite rangée, à ce que lesdites premières ouvertures (52) soient alignées les unes avec les autres selon une première ligne et lesdites deuxièmes ouvertures (53) soient alignées les unes avec les autres selon une deuxième ligne parallèle à ladite première ligne, avec pour plusieurs dits appareils électriques (22, 23, 26, 27, 29 ; 122-127 ; 226-229 ; 246-251 ; 268-273 ; 323-328 ; 334-336), la première barre omnibus qui est reçue dans une borne de neutre quand la première barre omnibus est dans l'espace s'étendant entre les deux première ouvertures d'extrémité (52) ; et la deuxième barre omnibus qui est reçue dans une borne de phase quand la deuxième barre omnibus est dans l'espace s'étendant entre les deux deuxième ouvertures d'extrémité (53).

2. Ensemble selon la revendication 1, **caractérisé en ce que** chaque dit appareil (21-29 ; 121-131 ; 201 ; 224-233 ; 245-255 ; 267-283 ; 305 ; 320-339) est adapté à recevoir une troisième barre omnibus (114) dans un espace s'étendant adapté à recevoir une troisième barre omnibus (114) dans un espace s'étendant depuis une troisième ouverture d'extrémité (53) ménagée en bordure dans une face principale jusqu'à une troisième ouverture d'extrémité (53) ménagée en bordure dans l'autre face principale, et à recevoir une quatrième barre omnibus dans un espace s'étendant depuis une quatrième ouverture d'extrémité (53) ménagée en bordure dans une face principale (32) jusqu'à une quatrième ouverture d'extrémité (53) ménagée en bordure dans l'autre face principale (32), lesdits appareils étant adaptés, lorsqu'ils forment une dite rangée, à ce que lesdites troisièmes ouvertures (53) soient alignées les unes avec les autres selon une troisième ligne parallèle à ladite première ligne et lesdites quatrièmes ouvertures (53) soient alignées les unes avec les autres selon une quatrième ligne parallèle à ladite première ligne.

3. Ensemble selon l'une quelconque des revendications 1 ou 2, **caractérisé en ce que** chaque dite barre omnibus (14 ; 114) est en forme de bande plate continue.

4. Ensemble selon la revendication 3, **caractérisé en ce que** chaque dite barre omnibus (14 ; 114) comporte une extrémité longitudinale effilée.

5. Ensemble selon l'une quelconque des revendications 3 ou 4, **caractérisé en ce que** chaque dite barre omnibus (14; 114) appartient à une réglette (11 ; 111 ; 221 ; 241 ; 261, 262 ; 311, 312) comportant en outre une embase (15 ; 115) en matière isolante présentant une gouttière (16 ; 116) dans laquelle est engagée et fixée ladite barre omnibus (14 ; 114).

6. Ensemble selon la revendication 5, **caractérisé en ce que** ladite réglette (11 ; 111 ; 221 ; 241 ; 261, 262 ; 311, 312) comporte au moins deux barres omnibus (14 ; 114), ladite embase (15 ; 115) comportant entre chaque couple de deux gouttières voisines (16 ; 116), une platine (17 ; 117) les réunissant.

7. Ensemble selon la revendication 6, **caractérisé en ce que** ladite platine (17 ; 117) est de largeur constante, de sorte que ladite embase (15 ; 115) maintient lesdites barres omnibus (14 ; 114) dans une position où elles sont en regard deux à deux et parallèles les unes aux autres.

8. Ensemble selon l'une quelconque des revendications 6 ou 7, **caractérisé en ce que** ladite réglette (11 ; 111 ; 221 ; 241 ; 261, 262 ; 311, 312) ne comporte, en outre desdites barres omnibus (14 ; 114) et desdites gouttières (16 ; 116), aucun élément autre que ladite ou lesdites platine(s) (17 ; 117).

9. Ensemble selon l'une quelconque des revendications 5 à 8, **caractérisé en ce que** lorsque ladite réglette (11 ; 111 ; 221 ; 241 ; 261, 262 ; 311, 312) est en place dans ladite rangée d'appareils (13 ; 113 ; 223 ; 243 ; 265, 266 ; 315, 316), ladite embase (15 ; 115) vient contre ou à proximité immédiate de la face supérieure des appareils de cette rangée.

10. Ensemble selon l'une quelconque des revendications 1 à 9, **caractérisé en ce que** la face supérieure (36) ou la face inférieure (34) d'au moins un dit appareil (21-29 ; 121-131 ; 201 ; 224-233 ; 245-255 ; 267-283 ; 305 ; 320-339) présente au moins une ouverture horizontale étroite (42, 43 ; 62-65 ; 66 ; 208-211 ; 340-343 ; 360-363) et orientée suivant la direction gauche-droite, donnant accès audit espace adapté à recevoir une dite barre omnibus (14 ; 114).

11. Ensemble selon la revendication 10, **caractérisé en ce que** ladite ouverture horizontale (42, 43 ; 62-65 ; 66 ; 208-211 ; 340-343 ; 360-363) s'étend de l'une à l'autre desdites faces principales (32).

12. Ensemble selon l'une quelconque des revendications 10 ou 11, **caractérisé en ce que** ladite ouverture horizontale (42, 43 ; 62-65 ; 66 ; 208-211 ; 340-343 ; 360-363) présente une largeur semblable à l'épaisseur de ladite barre omnibus (14 ; 114).

13. Ensemble selon l'une quelconque des revendications 10 à 12, **caractérisé en ce qu'**une borne à insertion (44) est disposée dans ledit espace adapté à recevoir ladite barre omnibus (14 ; 114), ladite borne à insertion (44) comportant une pince (45) présentant deux tronçons latéraux (50A, 50B) prévus pour enserrer ladite barre omnibus (14 ; 114), disposés respectivement de part et d'autre de ladite ouverture horizontale (42, 43 ; 62-65 ; 66 ; 208-211 ; 340-343 ; 360-363).

14. Ensemble selon l'une quelconque des revendications 1 à 13, **caractérisé en ce que** lesdites ouvertures d'extrémité (52, 53) sont étroites et orientées verticalement.

15. Ensemble selon la revendication 14, **caractérisé en ce que** lesdites ouvertures d'extrémité (52, 53) présentent une largeur semblable à l'épaisseur de ladite barre omnibus (14 ; 114).

16. Ensemble selon l'une quelconque des revendications 14 ou 15, **caractérisé en ce qu'**une borne à insertion (44) est disposée dans ledit espace adapté à recevoir ladite barre omnibus (14; 114), ladite borne à insertion (44) comportant une pince (45) présentant deux tronçons latéraux (50A, 50B) prévus pour enserrer ladite barre omnibus (14 ; 114), disposés respectivement de part et d'autre de chacune de deux ouvertures d'extrémité (52, 53) opposées.

17. Ensemble selon l'une quelconque des revendications 1 à 16, **caractérisé en ce qu'**au moins un desdits appareils électriques (21-24, 26, 27, 29 ; 122-127 ; 201 ; 226-229 ; 246-251 ; 268-273, 278-280 ; 322-328, 333-336) comporte au moins un compartiment (71 ; 297) dans lequel est immobilisé une borne à insertion (44) adaptée à recevoir une dite barre omnibus (14 ; 114).

18. Ensemble selon la revendication 17, **caractérisé en ce que** ledit compartiment (71 ; 297) s'ouvre vers l'extérieur exclusivement par lesdites ouvertures d'extrémité (52) et par une ouverture horizontale (42) ménagée dans ladite face supérieure (36) ou dans ladite face inférieure (34).

19. Ensemble selon l'une quelconque des revendications 17 ou 18, **caractérisé en ce que** ladite borne à insertion (44) comporte un pavé (47) par lequel elle est immobilisée dans ledit compartiment (71 ; 297).

20. Ensemble selon l'une quelconque des revendications 1 à 19, **caractérisé en ce qu'**au moins un desdits appareils électriques (22, 23, 25-29 ; 121-131 ; 224-233 ; 245-255 ; 267-283 ; 305 ; 321, 323-332, 334-339) comporte au moins un compartiment (69, 80 ; 169A, 169B, 169C, 169D ; 295 ; 306) dans lequel est mobile suivant la direction avant-arrière un coulisseau (54, 68 ; 168 ; 296 ; 307) en matière isolante renfermant une borne à insertion (44) adaptée à recevoir une dite barre omnibus (14 ; 114), ledit coulisseau (54, 68 ; 168 ; 296 ; 307) présentant une ouverture d'accès (43, 66) pour cette barre et admettant au moins deux positions de service distinctes, respectivement une première position de service dans laquelle ladite ouverture d'accès (43, 66) est alignée avec une première ouverture d'extrémité (53) ménagée en bordure dans une face principale (32) et avec une première ouverture d'extrémité (53) ménagée en bordure dans l'autre face principale (32) alors que ledit compartiment (69, 80 ; 169A, 169B, 169C, 169D ; 295 ; 306) comporte, entre une deuxième ouverture d'extrémité (53) ménagée en bordure dans ladite face principale (32) et une deuxième ouverture d'extrémité (53) ménagée en bordure dans ladite autre face principale (32), une portion vide, et une deuxième position de service dans laquelle ladite ouverture d'accès (43, 66) est alignée avec lesdites deuxièmes ouvertures (53) alors que ledit compartiment (69, 80 ; 169A, 169B, 169C, 169D ; 2915 ; 306) comporte entre lesdites premières ouvertures (53) une portion vide.

21. Ensemble selon la revendication 20, caractérisé ce que ledit compartiment (69, 80 ; 169A, 169B, 169C, 169D ; 295 ; 306) est délimité à gauche et à droite par une paroi de laquelle saille une nervure (82) de guidage du coulisseau (54) orientée suivant la direction avant-arrière, des rainures correspondantes étant ménagées dans ledit coulisseau (54).

22. Ensemble selon la revendication 21, **caractérisé en ce que** ladite nervure (82) est prévue en bordure de chaque dite paroi délimitant ledit compartiment (69, 80 ; 169A, 169B, 169C, 169D ; 295 ; 306).

23. Ensemble selon l'une quelconque des revendications 20 à 22, **caractérisé en ce que** ladite borne à insertion (44) est disposée dans un creux interne audit coulisseau (54), lequel a globalement une conformation annulaire à profil rectangulaire.

24. Ensemble selon l'une quelconque des revendications 20 à 23, **caractérisé en ce que** ladite borne à insertion (44) est reliée à l'une des extrémités d'un conducteur souple (83).

25. Ensemble selon la revendication 24, **caractérisé en ce que** ledit conducteur souple (83) est une tresse.

26. Ensemble selon l'une quelconque des revendications 20 à 25, **caractérisé en ce que** ledit compartiment (69, 80 ; 169A, 169B, 169C, 169D) est ouvert sur le dessus.

27. Ensemble selon l'une quelconque des revendications 20 à 25, **caractérisé en ce que** ledit compartiment (295, 306) est partiellement fermé sur le dessus par deux retours (303).

28. Ensemble selon l'une quelconque des revendications 20 à 27, **caractérisé en ce que** ledit coulisseau (54) comporte au moins une encoche (90) permettant l'insertion d'un outil tel qu'un tournevis à lame plate afin de le déplacer.

29. Ensemble selon la revendication 28, **caractérisé en ce que** ledit coulisseau (54) comporte une dite encoche (90) à l'avant et à l'arrière.

30. Ensemble selon l'une quelconque des revendications 20 à 29, **caractérisé en ce qu'**au moins un desdits appareils électriques (22, 23, 26, 27, 29 ; 122-127 ; 226-229 ; 246-251 ; 268-273, 278-280 ; 323-328, 334-336) comporte :
- un compartiment (71 ; 297) dans lequel est immobilisé une borne à insertion (44) adaptée à recevoir une dite barre omnibus (14 ; 114) ; et
- un compartiment (80 ; 295) dans lequel est mobile un coulisseau (54 ; 296) en matière isolante renfermant une borne à insertion (44) adaptée à recevoir une dite barre omnibus (14 ; 114), ledit coulisseau (54 ; 296) présentant une ouverture d'accès (43) pour cette barre et admettant trois positions de service distinctes, respectivement une position la plus en arrière, une position intermédiaire et une position la plus en avant, avec dans la position la plus arrière ladite ouverture d'accès (43) qui est alignée avec deux premières ouvertures d'extrémité opposées (53) ménagées en bordure respectivement dans une face principale (32) et dans l'autre phase principale (32), avec dans la position intermédiaire ladite ouverture d'accès (43) qui est alignée avec deux deuxièmes ouvertures d'extrémité opposées (53) ménagées en bordure respectivement dans une face principale (32) et dans l'autre face principale (32) et avec dans la position la plus en avant ladite ouverture d'accès (43) qui est alignée avec deux troisièmes ouvertures d'extrémité opposées (53) ménagées en bordure respectivement dans une face principale (32) et dans l'autre face principale (32), ledit compartiment (80 ; 295) dans lequel est mobile un coulisseau (54 ; 296) comportant dans ladite position la plus en arrière une portion vide entre lesdites deuxièmes ouvertures (53) et entre lesdites troisièmes ouvertures (53), dans ladite position intermédiaire une portion vide entre lesdites premières ouvertures (53) et lesdites troisièmes ouvertures (53), et dans ladite position la plus en avant, une portion vide entre lesdites premières ouvertures (53) et entre lesdites deuxièmes ouvertures (53).

31. Ensemble selon la revendication 30, **caractérisé en ce que** ledit compartiment (71 ; 297) dans lequel est immobilisée une borne à insertion (44) est en arrière dudit compartiment (80 ; 295) dans lequel est mobile un coulisseau (54 ; 296).

32. Ensemble selon l'une quelconque des revendications 20 à 29, **caractérisé en ce qu'**au moins un desdits appareils électriques (25, 28 ; 121, 128-131 ; 224, 225, 230-233 ; 245, 252-255 ; 267, 274-277, 281-283 ; 305 ; 321, 329-332, 337-339) comporte un compartiment (69 ; 169A, 169B, 169C, 169D ; 306) dans lequel est mobile un coulisseau (68 ; 168 ; 307) en matière isolante renfermant une borne à insertion (44) adaptée à recevoir une dite barre omnibus (14 ; 114), ledit coulisseau (68 ; 168 ; 307) présentant une ouverture d'accès (66) pour cette barre et admettant quatre positions de service distinctes, respectivement une position la plus en arrière, une position intermédiaire arrière, une position intermédiaire avant et une position la plus en avant, avec dans la position la plus en arrière ladite ouverture d'accès (66) qui est alignée avec deux premières ouvertures d'extrémité opposées (53) ménagées en bordure respectivement dans une face principale (32) et dans l'autre phase principale (32), avec dans la position intermédiaire arrière ladite ouverture d'accès (66) qui est alignée avec deux deuxièmes ouvertures d'extrémité opposées (53) ménagées en bordure respectivement dans une face principale (32) et dans l'autre face principale (32), avec dans la position intermédiaire avant ladite ouverture d'accès (66) qui est alignée avec deux troisièmes ouvertures d'extrémité opposées (53) ménagées en bordure respectivement dans une face principale (32) et dans l'autre face principale (32) et avec dans la position la plus en avant ladite ouverture d'accès (66) qui est alignée avec deux quatrièmes ouvertures d'extrémité opposées (53) ménagées en bordure respectivement dans une face principale (32) et dans l'autre face principale (32), ledit compartiment (69; 169A , 169B, 169C,169D ; 306) comportant dans ladite position la plus arrière une portion vide entre lesdites deuxièmes ouvertures (53), entre lesdites troisièmes ouvertures (53) et entre lesdites quatrièmes ouvertures (53), dans ladite position intermédiaire arrière une portion vide entre lesdites premières ouvertures (53), entre lesdites troisièmes ouvertures (53) et entre lesdites quatrièmes ouvertures (53), dans ladite position intermédiaire avant, une portion vide entre lesdites premières ouvertures (53), entre lesdites deuxièmes ouvertures (53) et entre lesdites quatrièmes ouvertures (53), et dans ladite position la plus en avant, une portion vide entre lesdites premières ouvertures (53), entre lesdites deuxièmes ouvertures (53) et entre lesdites troisièmes ouvertures (53).

33. Ensemble la revendication 32, **caractérisé en ce qu'**au moins un desdits appareils (121, 128-131 ; 224, 225, 230-233 ; 245, 252-255 ; 274-277, 281-283 ; 329-332, 337-339) comporte plusieurs dits compartiments (169A, 169B, 169C, 169D) dans lequel est mobile un dit coulisseau (168), lesdits compartiments (169A, 169B, 169C, 169D) étant disposés côte-à-côte.

34. Ensemble selon l'une quelconque des revendications 1 à 19, **caractérisé en ce qu'**au moins un desdits appareils électriques (21, 24 ; 201 ; 320, 322) comporte plusieurs bornes à insertion chacune adaptée à recevoir une dite barre omnibus (14 ; 114) et chacune immobilisée, lesdites bornes à insertion (44) étant disposées les unes derrière les autres.

35. Ensemble selon la revendication 34, **caractérisé en ce que** ledit appareil électrique comportant plusieurs bornes à insertion (44) chacune immobilisée, est un auxiliaire de signalisation (21, 24).

36. Ensemble selon la revendication 34, **caractérisé en ce que** ledit appareil électrique comportant plusieurs bornes à insertion (44) chacune immobilisée, est un adaptateur de raccordement (201 ; 320, 322) par réglette omnibus (311, 312).

37. Ensemble selon la revendication 36, **caractérisé en ce que** ledit adaptateur de raccordement (201) comporte un corps (202) ayant ladite forme parallélépipédique et une semelle (203) saillant dudit corps (202) et présentant des dents (204-207) saillant verticalement au-dessus de sa face supérieure.

38. Ensemble selon la revendication 37, **caractérisé en ce que** lesdites dents (204-207) sont alignées longitudinalement suivant un pas constant.

39. Ensemble selon la revendication 36, **caractérisé en ce que** ledit adaptateur de raccordement (320) présente dans une face principale des ouvertures (344-347) donnant chacune accès à une borne de raccordement pour un câble (348-351).

40. Ensemble selon la revendication 39, **caractérisé en ce que** ledit adaptateur de raccordement (320) comporte un couvercle frontal (352) mobile entre une position relevée et une position rabattue dans laquelle il masque des ouvertures (353-356) de commande des vis desdites bornes de raccordement auxquelles donnent accès lesdites ouvertures (344-347) ménagées dans ladite face principale.

41. Ensemble selon la revendication 36, **caractérisé en ce que** ledit adaptateur de raccordement (322) présente dans sa face latérale opposée à la face latérale où sont ménagées les ouvertures (360-363) donnant chacune accès à une borne à insertion immobilisée, des ouvertures d'accès à des bornes de raccordement pour des câbles (380-383).

42. Ensemble selon la revendication 41, **caractérisé en ce que** ledit adaptateur de raccordement (322) comporte un couvercle frontal (370) mobile entre une position relevée et une position rabattue masquant des orifices (371-374) de commande des vis desdites bornes de raccordement à des câbles électriques (380-383).

43. Ensemble selon l'une quelconque des revendications 1 à 42, **caractérisé en ce qu'**au moins un desdits appareils électriques (245-255) comporte sur une même face supérieure ou inférieure, des orifices donnant accès à des bornes à insertion pour une dite barre omnibus (14 ; 114) et des orifices (256-259) donnant accès à des bornes à insertion pour un câble électrique.

44. Ensemble selon l'une quelconque des revendications 1 à 42, **caractérisé en ce qu'**au moins un desdits appareils électriques (267-283 ; 305) comporte sur une même face supérieure ou inférieure, des orifices donnant accès à des bornes à insertion pour une dite barre omnibus (14 ; 114) et des orifices (290, 291 ; 308) donnant accès à des bornes à vis pour un câble électrique (298-301).

45. Ensemble selon la revendication 44, **caractérisé en ce que** ledit appareil électrique (267-283 ; 305) comporte d'un côté de l'échancrure (294) de fixation sur ledit rail de support (263, 264), une saillie vers l'arrière.

46. Ensemble selon l'une quelconque des revendications 1 à 45, **caractérisé en ce que** c'est la partie supérieure de chaque dit appareil qui est adapté à recevoir une portion à introduire de chaque dite barre omnibus (14 ; 114).

47. Ensemble selon l'une quelconque des revendications 1 à 46, **caractérisé en ce qu'**il comporte un appareil de tête de groupe (20 ; 120 ; 224 ; 244) protégeant les autres appareils alimentés par chaque dite barre omnibus (14 ; 114).

48. Ensemble selon l'une quelconque des revendications 1 à 46, **caractérisé en ce qu'**il comporte un appareil (267 ; 320) auquel sont connectés des câbles d'alimentation électrique (348-351) et une dite barre omnibus (14 ; 114) en parallèle, de sorte que ladite barre omnibus n'est pas protégée par un appareil de tête de groupe.

49. Ensemble selon l'une quelconque des revendications 1 à 48, **caractérisé en ce que** ledit rail de support (12 ; 112 ; 222 ; 242 ; 263, 264 ; 313, 314) est à profil en Ω.

## Patentansprüche

1. Verteilereinheit für Elektroinstallation mit:
- wenigstens zwei Sammelschienen, um jeweils horizontal einen jeweiligen Pol einer Stromquelle zu verteilen;
- einer Vielzahl elektrischer Installationsgeräte mit jeweils allgemein parallelepipedischer Form mit zwei Hauptstirnseiten (32) und Seitenflächen (33-36), die von einer Hauptstirnseite zur anderen verlaufen, wobei die Oberseite eines jeden Geräts oder die Unterseite eines jeden Geräts ein jeweils einzuführendes Teil einer jeden Sammelschiene aufzunehmen vermag; und
- einer Tragschiene (12; 112; 222; 242; 263, 264; 313, 314), die dazu vorgesehen ist, horizontal angeordnet zu werden, wobei die Geräte, wenn sie auf der Tragschiene befestigt sind, eine Reihe (13; 113; 223; 243; 265, 266; 315, 316) zu bilden vermögen, in der sie nebeneinander angeordnet sind, wobei die Tragschiene und die Sammelschienen bezüglich einander frei beweglich sind, wodurch die Sammelschienen angebracht oder entfernt werden können, während die Geräte an der Tragschiene befestigt sind;
wobei jede Sammelschiene (14; 114) in Höhe der einzuführenden Teile kontinuierlich ist, wobei jedes Gerät eine erste Sammelschiene in einem Raum aufzunehmen vermag, der sich von einer in der einen Hauptstirnseite (32) am Rand ausgebildeten ersten Endöffnung (52) bis zu einer in der anderen Hauptstirnseite (32) am Rand ausgebildeten ersten Endöffnung (52) erstreckt,
**dadurch gekennzeichnet, dass** jedes Gerät eine zweite Sammelschiene in einem Raum aufzunehmen vermag, der sich von einer in der einen Hauptstirnseite (32) am Rand ausgebildeten zweiten Endöffnung (53) bis zu einer in der anderen Hauptstirnseite (32) am Rand ausgebildeten zweiten Endöffnung (53) erstreckt, und dass die Geräte, wenn sie eine Reihe bilden, so ausgeführt sind, dass die ersten Öffnungen (52) miteinander in einer ersten Linie fluchtend angeordnet sind und die zweiten Öffnungen (53) miteinander in einer zur ersten Linie parallelen zweiten Linie fluchtend angeordnet sind, wobei bei mehreren elektrischen Installationsgeräten (22, 23, 26, 27, 29; 122-127; 226-251; 246-251; 268-273; 323-328; 334-336) die erste Sammelschiene in einer Neutralleiterklemme aufgenommen ist, wenn sich die erste Sammelschiene in dem Raum befindet, der sich zwischen den beiden ersten Endöffnungen (52) erstreckt; und die zweite Sammelschiene in einer Phasenklemme aufgenommen ist, wenn sich die zweite Sammelschiene in dem Raum befindet, der sich zwischen den beiden zweiten Endöffnungen (53) erstreckt.

2. Einheit nach Anspruch 1, **dadurch gekennzeichnet, dass** jedes Gerät (21-29; 121-131; 201; 224-233; 245-255; 267-283; 305; 320-339) eine dritte Sammelschiene (114) in einem Raum aufzunehmen vermag, der sich von einer in der einen Hauptstirnseite am Rand ausgebildeten dritten Endöffnung (53) bis zu einer in der anderen Hauptstirnseite am Rand ausgebildeten dritten Endöffnung (53) erstreckt, und eine vierte Sammelschiene in einem Raum aufzunehmen vermag, der sich von einer in der einen Hauptstirnseite (32) am Rand ausgebildeten vierten Endöffnung (53) bis zu einer in der anderen Hauptstirnseite (32) am Rand ausgebildeten vierten Endöffnung (53) erstreckt, wobei die Geräte, wenn sie eine Reihe bilden, so ausgeführt sind, dass die dritten Öffnungen (53) miteinander in einer zur ersten Linie parallelen dritten Linie fluchtend angeordnet sind, und die vierten Öffnungen (53) miteinander in einer zur ersten Linie parallelen vierten Linie fluchtend angeordnet sind.

3. Einheit nach einem der Ansprüche 1 oder 2, **dadurch gekennzeichnet, dass** jede Sammelschiene (14; 114) die Form eines kontinuierlichen flachen Bandes hat.

4. Einheit nach Anspruch 3, **dadurch gekennzeichnet, dass** jede Sammelschiene (14; 114) ein schmales Längsende hat.

5. Einheit nach einem der Ansprüche 3 oder 4, **dadurch gekennzeichnet, dass** jede Sammelschiene (14; 114) einer Leiste (11; 111; 221; 241; 261, 262; 311, 312) zugehörig ist, die ferner eine Fußfläche (15; 115) aus Isolierstoff umfasst, die eine Rinne (16; 116) aufweist, in die die Sammelschiene (14; 114) eingeführt und befestigt ist.

6. Einheit nach Anspruch 5, **dadurch gekennzeichnet, dass** die Leiste (11; 111, 221; 241; 261, 262; 311, 312) wenigstens zwei Sammelschienen (14; 114) umfasst, wobei die Fußfläche (15; 115) zwischen jedem aus zwei benachbarten Rinnen (16; 116) bestehenden Paar eine diese verbindende Platte (17, 117) aufweist.

7. Einheit nach Anspruch 6, **dadurch gekennzeichnet, dass** die Platte (17; 117) eine konstante Breite hat, so dass die Fußfläche (15; 115) die Sammelschienen (14; 114) in einer Position hält, in der sie sich paarweise gegenüberliegen und zueinander parallel sind.

8. Einheit nach einem der Ansprüche 6 oder 7, **dadurch gekennzeichnet, dass** die Leiste (11; 111; 221; 241; 261, 262; 311, 312) außer den Sammelschienen (14; 114) und den Rinnen (16; 116) kein weiteres Element als die Platte bzw. Platten (17; 117) umfasst.

9. Einheit nach einem der Ansprüche 5 bis 8, **dadurch gekennzeichnet, dass** die Fußfläche (15; 115), wenn die Leiste (11; 111; 221; 241; 261, 262; 311, 312) in der Gerätereihe (13; 113; 223; 243; 265, 266; 315, 316) angebracht ist, an der Oberseite der Geräte der Reihe oder in deren unmittelbare Nähe liegt.

10. Einheit nach einem der Ansprüche 1 bis 9, **dadurch gekennzeichnet, dass** die Oberseite (36) oder die Unterseite (34) wenigstens eines Geräts (21-29; 121-131; 201; 224-233; 245-255; 267-283; 305; 320-339) wenigstens eine schmale in Links-Rechts-Richtung ausgerichtete waagerechte Öffnung (42, 43; 62-65; 66; 208-211; 340-343; 360-363) aufweist, die Zugang zu dem Raum gewährt, der eine Sammelschiene (14; 114) aufzunehmen vermag.

11. Einheit nach Anspruch 10, **dadurch gekennzeichnet, dass** die waagerechte Öffnung (42, 43; 62-65; 66; 208-211; 340-343; 360-363) von einer Hauptstirnseite (32) zur anderen verläuft.

12. Einheit nach einem der Ansprüche 10 oder 11, **dadurch gekennzeichnet, dass** die waagerechte Öffnung (42, 43; 62-65; 66; 208-211; 340-343; 360-363) eine Breite aufweist, die der Dicke der Sammelschiene (14; 114) entspricht.

13. Einheit nach einem der Ansprüche 10 bis 12, **dadurch gekennzeichnet, dass** eine Steckklemme (44) in dem Raum angeordnet ist, der die Sammelschiene (14; 114) aufzunehmen vermag, wobei die Steckklemme (44) eine Klammer (45) mit zwei seitlichen Segmenten (50A, 50B) zum Umfassen der Sammelschiene (14; 114) aufweist, die jeweils beidseits der waagerechten Öffnung (42, 43; 62-65; 66; 208-211; 340-343; 360-363) angeordnet sind.

14. Einheit nach einem der Ansprüche 1 bis 13, **dadurch gekennzeichnet, dass** die Endöffnungen (52, 53) schmal und senkrecht ausgerichtet sind.

15. Einheit nach Anspruch 14, **dadurch gekennzeichnet, dass** die Endöffnungen (52, 53) eine Breite aufweisen, die der Dicke der Sammelschiene (14; 114) entspricht.

16. Einheit nach einem der Ansprüche 14 oder 15, **dadurch gekennzeichnet, dass** eine Steckklemme (44) in dem Raum angeordnet ist, der die Sammelschiene (14; 114) aufzunehmen vermag, wobei die Steckklemme (44) eine Klammer (45) mit zwei seitlichen Segmenten (50A, 50B) zum Umfassen der Sammelschiene (14; 114) aufweist, die jeweils beidseits der beiden Endöffnungen (52, 53) angeordnet sind.

17. Einheit nach einem der Ansprüche 1 bis 16, **dadurch gekennzeichnet, dass** wenigstens eines der elektrischen Installationsgeräte (21-24, 26, 27, 29; 122-127; 201; 226-229; 246-251; 268-273, 278-280; 322-328, 333-336) wenigstens eine Kammer (71; 297) aufweist, in der eine Steckklemme (44), die eine Sammelschiene (14; 114) aufzunehmen vermag, fixiert ist.

18. Einheit nach Anspruch 17, **dadurch gekennzeichnet, dass** die Kammer (71; 297) sich nur durch die Endöffnungen (52) und durch eine in der Oberseite (36) oder in der Unterseite (34) ausgebildete waagerechte Öffnung (42) nach außen öffnet.

19. Einheit nach einem der Ansprüche 17 oder 18, **dadurch gekennzeichnet, dass** die Steckklemme (44) eine Platte (47) aufweist, durch die sie in der Kammer (71; 297) fixiert ist.

20. Einheit nach einem der Ansprüche 1 bis 19, **dadurch gekennzeichnet, dass** wenigstens eines der elektrischen Installationsgeräte (22, 23, 25-29; 121-131; 224-233; 245-255; 267-283; 305; 321, 323-332, 334-339) wenigstens eine Kammer (69, 80; 169A, 169B, 169C, 169D; 295; 306) aufweist, in der ein Schieber (54, 68; 168; 296; 307) aus Isolierstoff in einer Richtung von vorne nach hinten verschiebbar ist, der eine Steckklemme (44) umfasst, die eine Sammelschiene (14; 114) aufzunehmen vermag, wobei der Schieber (54, 68; 168; 296; 307) eine Zugangsöffnung (43, 66) zu der Sammelschiene aufweist und wenigstens zwei unterschiedliche Betriebsstellungen zulässt, nämlich eine erste Betriebsstellung, in der die Zugangsöffnung (43, 66) mit einer in der einen Hauptstirnseite (32) am Rand ausgebildeten ersten Endöffnung (53) und mit einer in der anderen Hauptstirnseite (32) am Rand ausgebildeten ersten Endöffnung (53) fluchtend angeordnet ist, während die Kammer (69, 80; 169A, 169B, 169C, 169D; 295; 306) zwischen einer in der Hauptstirnseite (32) am Rand ausgebildeten zweiten Endöffnung (53) und einer in der anderen Hauptstirnseite (32) am Rand ausgebildeten zweiten Endöffnung (53) einen leeren Abschnitt aufweist, und eine zweite Betriebsstellung, in der die Zugangsöffnung (43, 66) mit den zweiten Öffnungen (53) fluchtend angeordnet ist, während die Kammer (69, 80; 169A, 169B, 169C, 169D; 295; 306) zwischen den ersten Öffnungen (53) einen leeren Abschnitt aufweist.

21. Einheit nach Anspruch 20, **dadurch gekennzeichnet, dass** die Kammer (69, 80; 169A, 169B, 169D; 295; 306) links und rechts durch eine Wand begrenzt ist, von der eine Rippe (82) zum Führen des Schiebers (54) vorsteht, die in der Richtung von vorne nach hinten ausgerichtet ist, wobei entsprechende Nuten in dem Schieber (54) ausgebildet sind.

22. Einheit nach Anspruch 21, **dadurch gekennzeichnet, dass** die Rippe (82) am Rand jeder die Kammer (69, 80; 169A, 169B, 169C, 169D; 295; 306) begrenzenden Wand vorgesehen ist.

23. Einheit nach einem der Ansprüche 20 bis 22, **dadurch gekennzeichnet, dass** die Steckklemme (44) in einer dem Schieber (54) zugehörigen Vertiefung angeordnet ist, die allgemein ringförmig mit rechteckigem Profil ausgebildet ist.

24. Einheit nach einem der Ansprüche 20 bis 23, **dadurch gekennzeichnet, dass** die Steckklemme (44) mit einem der Enden eines flexiblen Leiters (83) verbunden ist.

25. Einheit nach Anspruch 24, **dadurch gekennzeichnet, dass** der flexible Leiter (83) eine Litze ist.

26. Einheit nach einem der Ansprüche 20 bis 25, **dadurch gekennzeichnet, dass** die Kammer (69, 80; 169A, 169B, 169C, 169D) an der Oberseite offen ist.

27. Einheit nach einem der Ansprüche 20 bis 25, **dadurch gekennzeichnet, dass** die Kammer (295, 306) an der Oberseite durch zwei Umbiegungen (303) teilweise geschlossen ist.

28. Einheit nach einem der Ansprüche 20 bis 27, **dadurch gekennzeichnet, dass** der Schieber (54) wenigstens eine Einkerbung (90) aufweist, die das Einführen eines Werkzeugs wie einen Schraubendreher mit flacher Klinge zulässt, um diesen zu verschieben.

29. Einheit nach Anspruch 28, **dadurch gekennzeichnet, dass** der Schieber (54) eine derartige Einkerbung (90) vorne und hinten aufweist.

30. Einheit nach einem der Ansprüche 20 bis 29, **dadurch gekennzeichnet, dass** wenigstens eines der elektrischen Installationsgeräte (22, 23, 26, 27, 29; 122-127; 226-229; 246-251; 268-273, 278-280; 323-328, 334-336) umfasst:
- eine Kammer (71; 297), in der eine Steckklemme (44) fixiert ist, die eine Sammelschiene (14; 114) aufzunehmen vermag; und
- eine Kammer (80; 295), in der ein Schieber (54; 296) aus Isolierstoff verschiebbar ist, der eine Steckklemme (44) umfasst, die eine Sammelschiene (14; 114) aufzunehmen vermag, wobei der Schieber (54; 296) eine Zugangsöffnung (43) zu der Schiene aufweist und drei unterschiedliche Betriebsstellungen zulässt, nämlich eine ganz hinten gelegene Stellung, eine mittlere Stellung und eine ganz vorne gelegene Stellung, wobei die Zugangsöffnung (43) in der ganz hinten gelegenen Stellung mit zwei sich gegenüberliegenden ersten, in der einen Hauptstirnseite (32) bzw. in der anderen Hauptstirnseite am Rand ausgebildeten Endöffnungen (53) fluchtend angeordnet ist, wobei die Zugangsöffnung (43) in der mittleren Stellung mit zwei sich gegenüberliegenden zweiten, in der einen Hauptstirnseite (32) bzw. in der anderen Hauptstirnseite (32) am Rand ausgebildeten Endöffnungen (53) fluchtend angeordnet ist, und wobei die Zugangsöffnung (43) in der ganz vorne gelegenen Stellung mit zwei sich gegenüberliegenden dritten, in der einen Hauptstirnseite (32) bzw. in der anderen Hauptstirnseite (32) am Rand ausgebildeten Endöffnungen (53) fluchtend angeordnet ist, wobei die Kammer (80; 295), in der ein Schieber (54; 296) verschiebbar ist, in der ganz hinten gelegenen Stellung einen leeren Abschnitt zwischen den zweiten Öffnungen (53) und zwischen den dritten Öffnungen (53) aufweist, in der mittleren Stellung einen leeren Abschnitt zwischen den ersten Öffnungen (53) und den dritten Öffnungen (53) und in der ganz vorne gelegenen Stellung einen leeren Abschnitt zwischen den ersten Öffnungen (53) und den zweiten Öffnungen (53).

31. Einheit nach Anspruch 30, **dadurch gekennzeichnet, dass** die Kammer (71; 297), in der eine Steckklemme (44) fixiert ist, hinter der Kammer (80; 295) liegt, in der ein Schieber (54; 296) verschiebbar ist.

32. Einheit nach einem der Ansprüche 20 bis 29, **dadurch gekennzeichnet, dass** wenigstens eines der elektrischen Installationsgeräte (25, 28; 121, 128-131; 224, 225, 230-233; 245, 252-255; 267, 274-277, 281-283; 305; 321, 329-332, 337-339) eine Kammer (69; 169A, 169B, 169C, 169D; 306) aufweist, in der ein Schieber (68; 168; 307) aus Isolierstoff verschiebbar ist, der eine Steckklemme (44) umfasst, die eine Sammelschiene (14; 114) aufzunehmen vermag, wobei der Schieber (68; 168; 307) eine Zugangsöffnung (66) zu der Schiene aufweist und vier unterschiedliche Betriebsstellungen zulässt, nämlich eine ganz hinten gelegene Stellung, eine hintere mittlere Stellung, eine vordere mittlere Stellung und eine ganz vorne gelegene Stellung, wobei die Zugangsöffnung (66) in der ganz hinten gelegenen Stellung mit zwei sich gegenüberliegenden ersten, in der einen Hauptstirnseite (32) bzw. in der anderen Hauptstirnseite (32) am Rand ausgebildeten Endöffnungen (53) fluchtend angeordnet ist, wobei die Zugangsöffnung (66) in der hinteren mittleren Stellung mit zwei sich gegenüberliegenden zweiten, in der einen Hauptstirnseite (32) bzw. in der anderen Hauptstirnseite (32) am Rand ausgebildeten Endöffnungen (53) fluchtend angeordnet ist, wobei die Zugangsöffnung (66) in der vorderen mittleren Stellung mit zwei sich gegenüberliegenden dritten, in der einen Hauptstirnseite (32) bzw. in der anderen Hauptstirnseite (32) am Rand ausgebildeten Endöffnungen (53) fluchtend angeordnet ist, und wobei die Zugangsöffnung (66) in der ganz vorne gelegenen Stellung mit zwei sich gegenüberliegenden vierten, in der einen Hauptstirnseite (32) bzw. in der anderen Hauptstirnseite (32) am Rand ausgebildeten Endöffnungen (53) fluchtend angeordnet ist, wobei die Kammer (69; 169A, 169B, 169C, 169D; 306) in der ganz hinten gelegenen Stellung einen leeren Abschnitt zwischen den zweiten Öffnungen (53), zwischen den dritten Öffnungen (53) und zwischen den vierten Öffnungen (53) aufweist, in der hinteren mittleren Stellung einen leeren Abschnitt zwischen den ersten Öffnungen (53), zwischen den dritten Öffnungen (53) und zwischen den vierten Öffnungen (53), in der vorderen mittleren Stellung einen leeren Abschnitt zwischen den ersten Öffnungen (53), zwischen den zweiten Öffnungen (53) und zwischen den vierten Öffnungen (53), und in der ganz vorne gelegenen Stellung einen leeren Abschnitt zwischen den ersten Öffnungen (53), zwischen den zweiten Öffnungen (53) und zwischen den dritten Öffnungen (53).

33. Einheit nach Anspruch 32, **dadurch gekennzeichnet, dass** wenigstens eines der Geräte (121, 128-131; 224, 225, 230-233; 245, 252-255; 274-277, 281-283; 329-332, 337-339) mehrere Kammern (169A, 169B, 169C, 169D) aufweist, in denen ein Schieber (168) verschiebbar ist, wobei die Kammern (169A, 169B, 169C, 169D) nebeneinander angeordnet sind.

34. Einheit nach einem der Ansprüche 1 bis 19, **dadurch gekennzeichnet, dass** wenigstens eines der elektrischen Installationsgeräte (21, 24; 201; 320, 322) mehrere Steckklemmen umfasst, die jeweils eine Sammelschiene (14; 114) aufzunehmen vermögen und die jeweils fixiert sind, wobei die Steckklemmen (44) hintereinander angeordnet sind.

35. Einheit nach Anspruch 34, **dadurch gekennzeichnet, dass** das elektrische Installationsgerät, das mehrere jeweils fixierte Steckklemmen (44) umfasst, ein Signalisierungskontakt (21, 24) ist.

36. Einheit nach Anspruch 34, **dadurch gekennzeichnet, dass** das elektrische Installationsgerät, das mehrere jeweils fixierte Steckklemmen (44) umfasst, ein Adapter (201; 320, 322) zum Anschluss durch Sammelschienenleiste (311, 312) ist.

37. Einheit nach Anspruch 36, **dadurch gekennzeichnet, dass** der Anschlussadapter (201) einen Körper (202) mit parallelepipedischer Form und einen am Körper (202) vorspringenden Sockel (203) mit Stiften (204-207) aufweist, die an dessen Oberseite vorstehen.

38. Einheit nach Anspruch 37, **dadurch gekennzeichnet, dass** die Stifte (204-207) längs mit einem gleichmäßigen Abstand fluchtend angeordnet sind.

39. Einheit nach Anspruch 36, **dadurch gekennzeichnet, dass** der Anschlussadapter (320) in einer Hauptstirnseite Öffnungen (344-347) aufweist, die jeweils Zugang zu einer Anschlussklemme für ein Kabel (348-351) gewähren.

40. Einheit nach Anspruch 39, **dadurch gekennzeichnet, dass** der Anschlussadapter (320) eine stirnseitige Abdeckung (352) aufweist, die zwischen einer hochgeklappten Stellung und einer heruntergeklappten Stellung beweglich ist, in der sie die Öffnungen (353-356) zum Betätigen der Schrauben der Anschlussklemmen verdeckt, zu denen die in der Hauptstirnseite ausgebildeten Öffnungen (344-347) Zugang gewähren.

41. Einheit nach Anspruch 36, **dadurch gekennzeichnet, dass** der Anschlussadapter (322) in der Seitenfläche, die der Seitenfläche entgegengesetzt ist, in der die Öffnungen (360-363) ausgebildet sind, die jeweils Zugang zu einer fixierten Steckklemme gewähren, Zugangsöffnungen zu Anschlussklemmen für Kabel (380-383) aufweist.

42. Einheit nach Anspruch 41, **dadurch gekennzeichnet, dass** der Anschlussadapter (322) eine stirnseitige Abdeckung (370) aufweist, die zwischen einer hochgeklappten Stellung und einer heruntergeklappten Stellung beweglich ist, in der sie die Öffnungen (371-374) zum Betätigen der Schrauben der Anschlussklemmen für elektrische Kabel (380-383) verdeckt.

43. Einheit nach einem der Ansprüche 1 bis 42, **dadurch gekennzeichnet, dass** wenigstens eines der elektrischen Installationsgeräte (245-255) auf ein und derselben Ober- oder Unterseite Öffnungen aufweist, die Zugang zu Steckklemmen für eine Sammelschiene (14; 114) gewähren, und Öffnungen (256-259), die Zugang zu Steckklemmen für ein elektrisches Kabel gewähren.

44. Einheit nach einem der Ansprüche 1 bis 42, **dadurch gekennzeichnet, dass** wenigstens eines der elektrischen Installationsgeräte (267-283; 305) auf ein und derselben Ober- oder Unterseite Öffnungen aufweist, die Zugang zu Steckklemmen für eine Sammelschiene (14; 114) gewähren, und Öffnungen (290, 291; 308), die Zugang zu Schraubklemmen für ein elektrisches Kabel (298-301) gewähren.

45. Einheit nach Anspruch 44, **dadurch gekennzeichnet, dass** das elektrische Installationsgerät (267-283; 305) auf einer Seite des Ausschnitts (294) zur Befestigung auf der Tragschiene (263, 264) einen Vorsprung nach hinten aufweist.

46. Einheit nach einem der Ansprüche 1 bis 45, **dadurch gekennzeichnet, dass** der obere Teil eines jeden Geräts ein einzuführendes Teil jeder Sammelschiene (14; 114) aufzunehmen vermag.

47. Einheit nach einem der Ansprüche 1 bis 46, **dadurch gekennzeichnet, dass** sie ein Hauptgerät (20; 120; 224; 244) umfasst, das die anderen Geräte, die durch jede Sammelschiene (14; 114) gespeist werden, schützt.

48. Einheit nach einem der Ansprüche 1 bis 46, **dadurch gekennzeichnet, dass** sie ein Gerät (267; 320) umfasst, an das Zuleitungskabel (348-351) und parallel dazu eine Sammelschiene (14; 114) angeschlossen sind, so dass die Sammelschiene nicht durch ein Hauptgerät geschützt ist.

49. Einheit nach einem der Ansprüche 1 bis 48, **dadurch gekennzeichnet, dass** die Tragschiene (12; 112; 222; 242; 263, 264; 313, 314) ein Ω-Profil hat.

## Claims

1. A distribution unit for an electrical installation, including:
- at least two busbars, each for distributing horizontally a respective pole of an electrical energy source;
- a plurality of electrical devices, each of generally parallelepiped shape, having two principal faces (32) and side faces (33 - 36) which extend from one of the principal faces to the other, wherein the upper part of each said device or the lower part of each said device is adapted to receive a respective portion, to be inserted, of each said busbar; and
- a support rail (12; 112; 222; 242; 263, 264; 313, 314) which is provided to be arranged horizontally, wherein the said devices are adapted such that when they are fixed to the said support rail they form a row (13; 113; 223; 243; 265, 266; 315, 316) in which they are arranged side by side, wherein the said support rail and the said busbars are free from one another, as a result of which the said busbars may be put in place or removed while the said devices are fixed to the support rail; wherein each said busbar (14; 114) is continuous at the location of the portions to be inserted, wherein each said device is adapted to receive a first said busbar in a space extending from a first end opening (52) in the edge of a principal face (32) to a first end opening (52) in the edge of another principal face (32), **characterised in that** each said device is adapted to receive a second said busbar in a space extending from a second end opening (53) in the edge of a principal face (32) to a second end opening (53) in the edge of another principal face, and **in that**, when the said devices form a said row, they are adapted such that the said first openings (52) are aligned with one another in a first line and the said second openings (53) are aligned with one another in a second line parallel to the said first line with, for a plurality of said electrical devices (22, 23, 26, 27, 29; 122 - 127; 226 - 229; 246 - 251; 268 - 273; 323 - 328; 334 - 336), the first busbar, which is received in a neutral terminal when the first busbar is in the space extending between the two first end openings (52); and the second busbar, which is received in a phase terminal when the second busbar is in the space extending between the two second end openings (53).

2. A unit according to claim 1, **characterised in that** each said device (21 - 29; 121 - 131; 201; 224 - 233; 245 - 255; 267 - 283; 305; 320 - 339) is adapted to receive a third busbar (114) in a space extending from a third end opening (53) in the edge of a principal face to a third end opening (53) in the edge of another principal face, and to receive a fourth busbar in a space extending from a fourth end opening (53) in the edge of a principal face (32) to a fourth end opening (53) in the edge of another principal face (32), wherein when the said devices form a said row they are adapted such that the said third openings (53) are aligned with one another in a third line parallel to the said first line and the said fourth openings (53) are aligned with one another in a fourth line parallel to the said first line.

3. A unit according to either of claims 1 and 2, **characterised in that** each said busbar (14; 114) takes the form of a continuous flat band.

4. A unit according to claim 3, **characterised in that** each said busbar (14; 114) includes a tapering longitudinal end.

5. A unit according to either of claims 3 and 4, **characterised in that** each said busbar (14; 114) is part of a strip (11; 111; 221; 241; 261, 262; 311, 312) further including a base plate (15; 115) made from insulating material and having a trough (16; 116) in which there is engaged and fixed the said busbar (14; 114).

6. A unit according to claim 5, **characterised in that** the said strip (11; 111; 221; 241; 261, 262; 311, 312) includes at least two busbars (14; 114), wherein the said base plate (15; 115) includes between each pair of two adjacent troughs (16; 116) a plate (17; 117) that connects them.

7. A unit according to claim 6, **characterised in that** the said plate (17; 117) is of constant width, such that the said base plate (15; 115) keeps the said busbars (14; 114) in a position in which they are opposite one another in pairs and parallel to one another.

8. A unit according to either of claims 6 and 7, **characterised in that**, apart from the said busbars (14; 114) and the said troughs (16; 116), the said strip (11; 111; 221; 241; 261, 262; 311, 312) does not include any element other than the said plate(s) (17; 117).

9. A unit according to any one of claims 5 to 8, **characterised in that** when the said strip (11; 111; 221; 241; 261, 262; 311, 312) is in position in the said row of devices (13; 113; 223; 243; 265, 266; 315, 316), the said base plate (15; 115) comes up against or into the immediate vicinity of the upper face of the devices in this row.

10. A unit according to any one of claims 1 to 9, **characterised in that** the upper face (36) or the lower face (34) of at least one said device (21 - 29; 121 - 131; 201; 224 - 233; 245 - 255; 267 - 283; 305; 320 - 339) has at least one narrow horizontal opening (42, 43; 62 - 65; 66; 208 - 211; 340 - 343; 360 - 363) which is oriented in the left-right direction, giving access to the said space adapted to receive a said busbar (14; 114).

11. A unit according to claim 10, **characterised in that** the said horizontal opening (42, 43; 62 - 65; 66; 208 - 211; 340 - 343; 360 - 363) extends from one of the said principal faces to the other (32).

12. A unit according to either of claims 10 and 11, **characterised in that** the said horizontal opening (42, 43; 62 - 65; 66; 208 - 211; 340 - 343; 360 - 363) has a width similar to the thickness of the said busbar (14; 114).

13. A unit according to any one of claims 10 to 12, **characterised in that** a terminal to be inserted (44) is arranged in the said space adapted to receive the said busbar (14; 114), wherein the said terminal to be inserted (44) includes a clip (45) having two side sections (50A, 50B) which are provided to clamp the said busbar (14; 114) and which are respectively arranged on either side of the said horizontal opening (42, 43; 62 - 65; 66; 208 - 211; 340 - 343; 360 - 363).

14. A unit according to any one of claims 1 to 13, **characterised in that** the said end openings (52, 53) are narrow and are oriented vertically.

15. A unit according to claim 14, **characterised in that** the said end openings (52, 53) have a width similar to the thickness of the said busbar (14; 114).

16. A unit according to either of claims 14 and 15, **characterised in that** a terminal to be inserted (44) is arranged in the said space adapted to receive the said busbar (14; 114), wherein the said terminal to be inserted (44) includes a clip (45) having two side sections (50A, 50B) which are provided to clamp the said busbar (14; 114) and which are respectively arranged on either side of each of the two opposing end openings (52, 53).

17. A unit according to any one of claims 1 to 16, **characterised in that** at least one of the said electrical devices (21 - 24, 26, 27, 29; 122 - 127; 201; 226 - 229; 246 - 251; 268 - 273, 278 - 280; 322 - 328, 333 - 336) includes at least one compartment (71; 297) in which a terminal to be inserted (44), which is adapted to receive a said busbar (14; 114), is kept immobile.

18. A unit according to claim 17, **characterised in that** the said compartment (71; 297) opens towards the outside exclusively by way of the said end openings (52) and by way of a horizontal opening (42) in the said upper face (26) or the said lower face (34).

19. A unit according to either of claims 17 and 18, **characterised in that** the said terminal to be inserted (44) includes a slab (47) by means of which it is kept immobile in the said compartment (71; 297).

20. A unit according to any one of claims 1 to 19, **characterised in that** at least one of the said electrical devices (22, 23, 25 - 29; 121 - 131; 224 - 233; 245 - 255; 267 - 283; 305; 321, 323 - 332, 334 - 339) includes at least one compartment (69, 80; 169A, 169B, 169C, 169D; 295; 306) in which a slide (54, 68; 168; 296; 307) which is made from insulating material is mobile in the forward-backward direction and encloses a terminal to be inserted (44), which is adapted to receive a said busbar (14; 114), wherein the said slide (54, 68; 168; 296; 307) has an access opening (43, 66) for this bar and allows at least two distinct service positions, respectively a first service position in which the said access opening (43, 66) is aligned with a first end opening (53) in the edge of a principal face (32) and with a first end opening (53) in the edge of the other principal face (32), while the said compartment (69, 80; 169A, 169B, 169C, 169D; 295; 306) includes, between a second end opening (53) in the edge of the said principal face (32) and a second end opening (53) in the edge of the other principal face (32), an empty portion, and a second service position in which the said access opening (43, 66) is aligned with the said second openings (53) while the said compartment (69, 80; 169A, 169B, 169C, 169D; 295; 306) includes an empty portion between the said first openings (53).

21. A unit according to claim 20, **characterised in that** the said compartment (69, 80; 169A, 169B, 169C, 169D; 295; 306) is delimited to left and right by a wall from which there projects a rib (82) which is for guiding the slide (54) and is oriented in the forward-backward direction, wherein corresponding ribs are made in the said slide (54).

22. A unit according to claim 21, **characterised in that** the said rib (82) is provided on the edge of each said wall delimiting the said compartment (69, 80; 169A, 169B, 169C, 169D; 295; 306).

23. A unit according to any one of claims 20 to 22, **characterised in that** the said terminal to be inserted (44) is arranged in an internal hollow within the said slide (54), which overall has an annular shape with a rectangular profile.

24. A unit according to any one of claims 20 to 23, **characterised in that** the said terminal to be inserted (44) is connected to one of the ends of a flexible conductor (83).

25. A unit according to claim 24, **characterised in that** the said flexible conductor (83) is a braid.

26. A unit according to any one of claims 20 to 25, **characterised in that** the said compartment (69, 80; 169A, 169B, 169C, 169D) is upwardly open.

27. A unit according to any one of claims 20 to 25, **characterised in that** the said compartment (296, 306) is partly upwardly closed by two return portions (303).

28. A unit according to any one of claims 20 to 27, **characterised in that** the said slide (54) includes at least one notch (90) allowing a tool such as a flat-blade screwdriver to be inserted to be inserted in order to displace it.

29. A unit according to claim 28, **characterised in that** the said slide (54) includes a said notch (90) at the front and at the rear.

30. A unit according to any one of claims 20 to 29, **characterised in that** at least one of the said electrical devices (22, 23, 26, 27, 29; 122 - 127; 226 - 229; 246 - 251; 268 - 273, 278 - 280; 323 - 328, 334 - 336) includes:
- a compartment (71; 297) in which a terminal to be inserted (44), which is adapted to receive a said busbar (14; 114), is kept immobile; and
- a compartment (80; 295) in which a slide (54; 296) which is made from insulating material is mobile and encloses a terminal to be inserted (44) which is adapted to receive a said busbar (14; 114), wherein the said slide (54; 296) has an access opening (43) for this bar and allows three distinct service positions, respectively a position furthest back, an intermediate position and a position furthest forward, wherein in the position furthest back the said access opening (43) is aligned with two opposing first end openings (53) in the edge of a principal face (32) and the other principal face (32) respectively, and in the intermediate position the said access opening (43) is aligned with two opposing second end openings (53) in the edge of a principal face (32) and the other principal face (32) respectively, and in the position furthest forward the said access opening (43) is aligned with two opposing third end openings (53) in the edge of a principal face (32) and the other principal face (32) respectively, wherein the said compartment (80; 295) in which a slide (54; 296) is mobile includes, in the said position furthest back, an empty portion between the said second openings (53) and between the said third openings (53), and in the said intermediate position, an empty portion between the said first openings (53) and the said third openings (53), and in the said position furthest forward, an empty portion between the said first openings (53) and between the said second openings (53).

31. A unit according to claim 30, **characterised in that** the said compartment (71; 297) in which a terminal to be inserted (44) is kept immobile is behind the said compartment (80; 295) in which a slide (54; 296) is mobile.

32. A unit according to any one of claims 20 to 29, **characterised in that** at least one of the said electrical devices (25, 28; 121, 128 - 131; 224, 225, 230 - 233; 245, 252 - 255; 267, 274 - 277, 281 - 283; 305; 321, 329 - 332, 337 - 339) includes a compartment (69; 169A, 169B, 169C, 169D; 306) in which a slide (68; 168; 307) which is made from insulating material is mobile and encloses a terminal to be inserted (44) which is adapted to receive a said busbar (14; 114), wherein the said slide (68; 168; 307) has an access opening (66) for this bar and allows four distinct service positions, respectively a position furthest back, a rear intermediate position, a front intermediate position and a position furthest forward, wherein in the position furthest back the said access opening (66) is aligned with two opposing first end openings (53) in the edge of a principal face (32) and the other principal face (32) respectively, and in the rear intermediate position the said access opening (66) is aligned with two opposing second end openings (53) in the edge of a principal face (32) and in the other principal face (32) respectively, and in the front intermediate position the said access opening (66) is aligned with two opposing third end openings (53) in the edge of a principal face (32) and the other principal face (32) respectively, and in the position furthest forward the said access opining (66) is aligned with two opposing fourth end openings (53) in the edge of a principal face (32) and the other principal face (32) respectively, wherein the said compartment (69; 169A, 169B, 169C, 169D; 306) includes, in the said position furthest back, an empty portion between the said second openings (53), between the said third openings (53) and between the said fourth openings (53), and in the said rear intermediate position, an empty portion between the said first openings (53), between the said third openings (53) and between the said fourth openings (53), and in the said front intermediate position, an empty portion between the said first openings (53), between the said second openings (53) and between the said fourth openings (53), and in the said position furthest forward, an empty portion between the said first openings (53), between the said second openings (53) and between the said third openings (53).

33. A unit according to claim 32, **characterised in that** at least one of the said devices (121, 128 - 131; 224, 225, 230 - 233; 245, 252 - 255; 274 - 277, 281-283; 329 - 332, 337 - 339) includes a plurality of said compartments (169A, 169B, 169C, 169D) in which a said slide (168) is mobile, wherein the said compartments (169A, 169B, 169C, 169D) are arranged side by side.

34. A unit according to any one of claims 1 to 19, **characterised in that** at least one of the said electrical devices (21, 24; 201; 320, 322) includes a plurality of terminals to be inserted, each adapted to receive a said busbar (14; 114) and each kept immobile, wherein the said terminals to be inserted (44) are arranged one behind the others.

35. A unit according to claim 34, **characterised in that** the said electrical device which includes a plurality of terminals to be inserted (44), each kept immobile, is an auxiliary component for signalling (21, 24).

36. A unit according to claim 34, **characterised in that** the said electrical device which includes a plurality of terminals to be inserted (44), each kept immobile, is an adapter for connection (201; 320, 322) by means of a busbar strip (311, 312).

37. A unit according to claim 36, **characterised in that** the said connecting adapter (201) includes a body (202) having the said parallelepiped shape and a flange (203) projecting from the said body (202) and having teeth (204 - 207) projecting vertically above its upper face.

38. A unit according to claim 37, **characterised in that** the said teeth (204 - 207) are aligned longitudinally at a constant pitch.

39. A unit according to claim 36, **characterised in that** the said connecting adapter (320) is present in a principal face of the openings (344 - 347), each giving access to a connecting terminal for a cable (348 - 351).

40. A unit according to claim 39, **characterised in that** the said connecting adapter (320) includes a front cover (352) which is mobile between a raised position and a lowered position, in which it screens off openings (353 - 356) for controlling screws of the said connecting terminals to which the said openings (344 - 347) in the said principal face give access.

41. A unit according to claim 36, **characterised in that** the said connecting adapter (322) has, in its opposite side face to the side face in which there are the openings (360 - 363) which each give access to a terminal which is to be inserted and is kept immobile, openings for access to connecting terminals for cables (380 - 383).

42. A unit according to claim 41, **characterised in that** the said connecting adapter (322) includes a front cover (370) which is mobile between a raised position and a lowered position, in which it screens off openings (371 - 374) for controlling screws of the said connecting terminals to electrical cables (380 - 383).

43. A unit according to any one of claims 1 to 42, **characterised in that** at least one of the said electrical devices (245 - 255) includes, on the same upper or lower face, openings giving access to terminals to be inserted for a said busbar (14; 114) and openings (256 - 259) giving access to terminals to be inserted for an electrical cable.

44. A unit according to any one of claims 1 to 42, **characterised in that** at least one of the said electrical devices (267 - 283; 305) includes, on the same upper or lower face, openings giving access to terminals to be inserted for a said busbar (14; 114) and openings (290, 291; 308) giving access to terminals having screws for an electrical cable (298 - 301).

45. A unit according to claim 44, **characterised in that** the said electrical device (267 - 283; 305) includes, to one side of the cut-out (294) for fixing to the said support rail (263, 264), a projection towards the rear.

46. A unit according to any one of claims 1 to 45, **characterised in that** it is the upper part of each said device which is adapted to receive a portion, to be introduced, of each said busbar (14; 114).

47. A unit according to any one of claims 1 to 46, **characterised in that** it includes a leader device (20; 120; 224; 244) which protects the other devices supplied by each said busbar (14; 114).

48. A unit according to any one of claims 1 to 46, **characterised in that** it includes a device (267; 320) to which there are connected in parallel electrical supply cables (348 - 351) and a said busbar (14; 114) such that the said busbar is not protected by a leader device.

49. A unit according to any one of claims 1 to 48, **characterised in that** the said support rail (12; 112; 222; 242; 263, 264; 313, 314) has a profile in the shape of a Ω.
